# EUROPEAN PATENT APPLICATION

(11) **EP 4 517 867 A1**
(43) Date of publication of application: **05.03.2025**
(21) Application number: 24180028.3
(22) Date of filing: 04.06.2024
(51) Int. Cl.: H01M 4/136, H01M 4/38, H01M 4/58, H01M 4/62, H01M 4/66, H01M 10/052, H01M 10/0562

(54) **ALL SOLID SECONDARY BATTERY**

(30) Priority: 04.09.2023 KR 20230117225
(71) Applicant: Samsung SDI Co., Ltd., Yongin-si, Gyeonggi-do 17084 (KR)
(72) Inventor: Park, Taehyun, 17084 Yongin-si, Gyeonggi-do (KR); Son, Inhyuk, 17084 Yongin-si, Gyeonggi-do (KR); Jo, Sungnim, 17084 Yongin-si, Gyeonggi-do (KR); Shim, Kyueun, 17084 Yongin-si, Gyeonggi-do (KR); Lee, Jieun, 17084 Yongin-si, Gyeonggi-do (KR); Lim, Hyungsub, 17084 Yongin-si, Gyeonggi-do (KR)
(74) Representative: Michalski Hüttermann & Partner Patentanwälte mbB

(57) **Abstract**

An all solid secondary battery includes a cathode layer, an anode layer, and a solid electrolyte layer between the cathode layer and the anode layer, wherein the cathode layer includes a cathode current collector and a cathode active material layer on a side of the cathode current collector, the cathode active material layer includes a M₂S-containing composite, M being lithium or sodium, the solid electrolyte layer includes a first solid electrolyte layer including a solid electrolyte represented by Formula 1 and a second solid electrolyte layer including a solid electrolyte represented by Formula 2, the first solid electrolyte layer is directly on the cathode active material layer and/or a first anode active material layer, and the anode layer includes an anode current collector and the first anode active material layer on a surface of the anode current collector.

Formula 1 (Li_{1-b}M0_{b})_{7-z}PS_{6-z}M3_{z}

Formula 2 LiₐM1ₓM2_{w}PS_{y}M3_{z}

## Description

### CROSS-REFERENCE TO RELATED APPLICATION

The present application claims priority to and the benefit of Korean Patent Application No. 10-2023-0117225, filed on September 4, 2023, in the Korean Intellectual Property Office, the entire content of which is incorporated herein by reference.

### BACKGROUND

### 1. Field

One or more embodiments of the present disclosure relate to an all solid secondary battery.

### 2. Description of the Related Art

Recently, there has been active and progressive development of batteries that provide increased energy density and improved safety. Lithium batteries are extensively utilized in information devices, communication devices, automobiles (e.g., vehicles or electric vehicles), etc. Therefore, safety of lithium batteries becomes important and crucial because vehicles (e.g., cars) are related to user's wellbeing.

Typical lithium batteries including liquid electrolytes include flammable organic solvents. Thus, lithium batteries including liquid electrolytes may have a high risk of overheating and fire in the event of a short circuit.

In comparison, solid electrolytes may have a reduced possibility of overheating and fire in the event of a short circuit compared to liquid electrolytes. As a result, lithium batteries including solid electrolytes may provide improved safety compared to lithium batteries including liquid electrolytes.

Lithium batteries may utilize sulfur-based materials (e.g., sulfur (S)) as a cathode active material to increase capacity. In the preparation of a secondary battery utilizing a sulfur-based material, a cathode does not include lithium, and instead an anode uses lithium metal. During an initial discharge process of such a secondary battery, the lithium metal transfers to a cathode including a sulfur-based material, and then during a subsequent charging process, the transferred lithium metal may then be plated between an anode current collector and an electrolyte layer. During a lithium plating process, lithium dendrites and/or dead lithium are likely to be formed due to irregular precipitation of lithium. Then, the reversibility of an electrode reaction may be reduced due to the formation of such lithium dendrites and/or dead lithium. Thus, a method of suppressing irregular plating of lithium plated on an anode is required and/or desired.

In a secondary battery including lithium metal, due to the growth of lithium dendrites formed during a charging and discharging process and/or the elution of molten lithium, a short circuit between lithium metal and a cathode may occur. Thus, a secondary battery in which the growth of lithium dendrites and/or a short circuit between lithium metal and the cathode can be effectively prevented or reduced during a charging and discharging process is required and/or desired.

For utilization as a solid electrolyte in such a secondary battery, a sulfide-based solid electrolyte, LiPSCI, is mainly utilized. However, such a solid electrolyte has low high-rate characteristics due to low ion conductivity, which may also need to be improved.

### SUMMARY

One or more aspects of embodiments of the present disclosure are directed toward an all solid secondary battery with improved yield and/or lifespan characteristics by utilizing a solid electrolyte layer having improved ion (e.g., ionic) conductivity.

Additional aspects will be set forth in part in the description which follows and, in part, will be apparent from the description, or may be learned by practice of the presented embodiments of the present disclosure.

According to one or more embodiments of the present disclosure, an all solid secondary battery includes
a cathode layer, an anode layer, and a solid electrolyte layer between the cathode layer and the anode layer,
wherein the cathode layer may include a cathode current collector and a cathode active material layer on a side (e.g., at least one surface (or side) (e.g., on one surface (or side) or both (e.g., two opposite) surfaces (or sides))) of the cathode current collector,
the cathode active material layer may include a M₂S-containing composite, wherein M may be an alkali metal, and the alkali metal may be lithium (Li) or sodium (Na),
the solid electrolyte layer may include a first solid electrolyte layer including a solid electrolyte (e.g., a first solid electrolyte) represented by Formula 1, and a second solid electrolyte layer including a solid electrolyte (e.g., a second solid electrolyte) represented by Formula 2, wherein the first solid electrolyte layer may be directly on at least one of the cathode active material layer or a first anode active material layer, and
the anode layer may include an anode current collector and the first anode active material layer on a side (one surface (or side)) of the anode current collector:

   **Formula 1** **(Li_{1-b}M0_{b})_{7-z}PS_{6-z}M3_{z},**

   wherein, in Formula 1, M0 may be sodium (Na), potassium (K), iron (Fe), magnesium(Mg), calcium (Ca), silver (Ag), copper (Cu), zirconium (Zr), zinc (Zn), or one or more combinations thereof, M3 may be an element selected from elements of Group 17 of the periodic table of the elements, 0≤b≤0.05, and 0≤z≤2,

   **Formula 2** **LiₐM1ₓM2_{w}PS_{y}M3_{z},**

   wherein, in Formula 2, M1 is an element selected from elements of Groups 2 and 11 of the periodic table of the elements,
   M2 may be a metal element other than Li, and may be selected from elements of Group 1 of the periodic table of the elements,
   M3 may be an element selected from elements of Group 17 of the periodic table of the elements,
   4≤a≤8, 0≤x≤0.5, 0≤w≤0.5, 3≤y≤7, and 0≤z≤2.

### BRIEF DESCRIPTION OF DRAWINGS

The accompanying drawing is included to provide a further understanding of the present disclosure, and is incorporated in and constitutes a part of this specification. The drawing illustrates example embodiments of the present disclosure and, together with the description, serve to explain principles of present disclosure. The above and other aspects, features, and advantages of certain embodiments of the present disclosure will be more apparent from the following description taken in conjunction with the accompanying drawings, in which:
FIG. 1 is a cross-sectional view of an all solid secondary battery according to one or more embodiments of the present disclosure;
FIG. 2 is a cross-sectional view of an all solid secondary battery according to one or more embodiments of the present disclosure; and
FIGs. 3-6 are each a cross-sectional view of an all solid secondary battery according to one or more embodiments of the present disclosure.

### DETAILED DESCRIPTION

Reference will now be made in more detail to embodiments, examples of which are illustrated in the accompanying drawings, wherein like reference numerals refer to like elements throughout the present disclosure, and duplicative descriptions thereof may not be provided for conciseness. In this regard, the embodiments of the present disclosure may have different forms and should not be construed as being limited to the descriptions set forth herein. Accordingly, the embodiments of the present disclosure are merely described, by referring to the drawings, to explain aspects of the present disclosure. As utilized herein, the term "and/or" or "or" may include any and all combinations of one or more of the associated listed items. Expressions such as "at least one of," "one of," and "selected from," when preceding a list of elements, modify the entire list of elements and do not modify the individual elements of the list. For example, "at least one of a, b or c", "at least one selected from among a, b, and c", "at least one selected from among a to c", etc., may indicates only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

Various embodiments are shown in the accompanying drawings. However, the presented embodiments idea may be embodied in many different forms and should not be construed as being limited to the implementations described herein. Rather, these embodiments are provided so that the present disclosure will be thorough and complete, and will fully convey the scope of the inventive idea to those skilled in the art. Like reference numerals designate like components.

It will be understood that when an element is referred to as being "on" another element, it may be directly on top of the other element, or another element (e.g., an intervening element) may be interposed therebetween. In contrast, when an element is referred to as being "directly on" another element, there is no intervening element between them.

Although the terms "first," "second," "third," and/or the like may be utilized herein to describe one or more suitable components, components, regions, layers, and/or regions, these components, components, regions, layers, and/or region should not be limited by these terms. These terms are only utilized to distinguish one element, component, region, layer, or region from another element, component, region, layer, or region. Thus, a first component, ingredient, region, layer, or area described could be termed a second component, ingredient, region, layer, or area without departing from the teachings herein.

Terms utilized herein are for the purpose of describing specific embodiments, and are not intended to limit the presented embodiments. As utilized herein, the singular form is intended to include the plural form including "at least one", for example, the singular forms "a," "an," "one," and "the" are intended to include the plural forms, unless the context clearly dictates otherwise. "At least one" should not be construed as limiting to the singular. As utilized herein, the term "and/or" includes any and all combinations of one or more of the listed items. The terms "comprise(s)/comprising" and/or "Include(s)/including" and/or "have(has)/having" as utilized in the detailed description specify the presence of specified features, regions, integers, steps, operations, components, and/or ingredients, however, does not exclude the presence or addition of one or more other features, regions, integers, steps, operations, components, and/or ingredients. Further, the use of "may" when describing embodiments of the present disclosure refers to "one or more embodiments of the present disclosure".

Spatially relative terms, such as "beneath," "below," "lower," "top," "above;" "upper," etc., may be utilized to facilitate describing the relationship of one component or feature to another component or feature. It will be understood that spatially relative terms are intended to include different orientations of a device in utilization or operation in addition to the orientations shown in drawings. For example, when a device in drawings is turned over, elements described as "beneath" or "bottom" other elements or features will be oriented "above" the other elements or features. Thus, the example term "below" may encompass both (e.g., simultaneously) directions of up and down. A device may be positioned in other orientations (for example, rotated 90 degrees or rotated in other directions), and the spatially relative terms utilized herein should be interpreted accordingly.

The term "length", "thickness", and "width" as utilized herein refers to, for example, an average length, an average thickness, and an average width respectively. The "length", "thickness", and "width" measured utilizing software from a scanning electron microscope image.

In the present disclosure, the term "aspect ratio" represents the ratio (L1/L2) of the major axis length L1 (eg, length) and the minor axis length L2 (eg, diameter). Here, the aspect ratio, major ais length, minor axis length, length, and diameter represent the average aspect ratio, average major axis length, average minor axis length, average length, and average diameter. The aspect ratio can be evaluated using a scanning electron microscope.

Unless otherwise defined, all terms (including technical and scientific terms) utilized in the present disclosure have the same meaning as commonly understood by those skilled in the art to which the present disclosure belongs to. Terms such as those defined in commonly utilized dictionaries should be interpreted to have meanings consistent with the meaning in the related art and the present disclosure, and should not be construed as being idealized.

Example embodiments are described with reference to cross-sectional views that are schematic diagrams of idealized embodiments. As such, variations from the illustrated shape should be expected as a result of, for example, manufacturing techniques and/or tolerances. Thus, the embodiments described herein should not be construed as being limited to the specific shapes of regions as shown herein, but should include deviations in shapes resulting, for example, from manufacturing. For example, regions illustrated or described as flat regions may generally have rough and/or non-linear characteristics. Moreover, the angles shown as sharp may be round. Therefore, regions illustrated in drawings are schematic in nature, and shapes thereof are not intended to illustrate the precise shape of the regions and are not intended to limit the scope of the appended claims.

The term "Group" as utilized herein refers to a group of the Periodic Table of Elements according to the 1 to 18 grouping system of the International Union of Pure and Applied Chemistry ("IUPAC").

In the present disclosure, the term "particle diameter" or "particle size" refers to an average diameter/size of particles (e.g., crystallites or crystallite particles) if (e.g., when) the particles are spherical, and refers to an average major axis length of particles if (e.g., when) the particles are non-spherical. The particle diameter/size may be measured by utilizing a particle size analyzer (PSA). The "particle diameter/size" may refer to, for example, an average particle diameter/size. The "average particle diameter/size" may be, for example, a median particle diameter/size D50.

For example, a median particle diameter/size D50 refers to a particle size corresponding to a 50 % cumulative volume calculated from particles having a small particle size to particles having a large particle size in a particle size distribution measured by, for example, a laser diffraction method.

For example, a median particle diameter/size D90 refers to a particle size corresponding to a 90 % cumulative volume calculated from particles having a small particle size to particles having a large particle size in a particle size distribution measured by, for example, a laser diffraction method.

For example, a median particle diameter/size D10 refers to a particle size corresponding to a 10 % cumulative volume calculated from particles having a small particle size to particles having a large particle size in a particle size distribution measured by, for example, a laser diffraction method.

The term "metal" as utilized herein includes both (e.g., simultaneously) a metal and a metalloid, such as silicon and germanium, in an elemental state or an ionic state.

The term "alloy" as utilized herein refers to a mixture or a combination of two or more metals.

The term "electrode active material" as utilized herein refers to an electrode material capable of undergoing lithiation and delithiation.

The term "cathode active material" as utilized herein refers to a cathode material capable of undergoing lithiation and delithiation.

The term "anode active material" as utilized herein refers to an anode material capable of undergoing lithiation and delithiation.

The terms "lithiation" and "lithiate" as utilized herein refer to a process of adding lithium to an electrode active material.

The terms "delithiation" and "delithiate" as utilized herein refer to a process of removing lithium from an electrode active material.

The terms "charging" and "charge" as utilized herein refer to a process of providing electrochemical energy to a battery.

The terms "discharging" and "discharge" as utilized herein refer to a process of eliminating (e.g., removing) electrochemical energy from a battery.

The terms "cathode" and "positive electrode" as utilized herein refer to an electrode in which electrochemical reduction and lithiation occur during a discharge process.

The terms "anode" and "negative electrode" as utilized herein refer to an electrode in which electrochemical oxidation and delithiation occur during a charge process.

In the present disclosure, the term "cathode layer", "anode layer", "solid electrolyte layer" as utilized herein may be (one) layer, a structure or set of several layers, respectively. According to another embodiment, when the anode layer, cathode layer, and solid electrolyte layer have a structure or a set of multiple layers, they may be called "cathode layer structure", "anode layer structure", and "solid electrolyte layer structure", respectively.

"In present disclosure, the term "A is on surface of B" does not exclude embodiments where there are further layers between A and B".While particular embodiments will be described herein, currently unforeseen or unforeseeable alternatives, modifications, variations, improvements, and substantial equivalents may occur to applicants or those skilled in the art. Accordingly, the appended claims as filed and as may be amended are intended to embrace all such alternatives, modifications, variations, improvements, and substantial equivalents.

Hereinafter, an all solid secondary battery according to embodiments will be described in more detail.

According to one or more aspects of embodiments of the present disclosure, an all solid secondary battery may include: a cathode layer; an anode layer; and a solid electrolyte layer between the cathode layer and the anode layer, wherein the cathode layer may include: a cathode current collector; and a cathode active material layer on a side (e.g., one surface (or side) or both (e.g., two opposite) surfaces (or sides)) of the cathode current collector, the cathode active material layer may include a M₂S-containing composite, M may an alkali metal, and the alkali metal may be Li or Na. In one or more embodiments, the solid electrolyte layer may include a first solid electrolyte layer including a solid electrolyte represented by Formula 1 (e.g., as a first sulfide-based solid electrolyte), and a second solid electrolyte layer including a solid electrolyte represented by Formula 2 (e.g., as a second sulfide-based solid electrolyte), wherein the first solid electrolyte layer may be directly on at least one of the cathode active material layer or a first anode active material layer, and the anode layer may include an anode current collector and the first anode active material layer on one surface (or side) of the anode current collector: **F**

**ormula 1** **(Li_{1-b}M0_{b})_{7-z}PS_{6-z}M3_{z},**

wherein, in Formula 1, M0 may be Na, K, Fe, Mg, Ca, Ag, Cu, Zr, Zn, or one or more combinations thereof, M3 may be an element selected from elements of Group 17 of the periodic table of the elements, 0≤b≤0.05, and 0≤z≤2,

**Formula 2** **LiₐM1ₓM2_{w}PS_{y}M3_{z},**

wherein, in Formula 2, M1 may be an element selected from elements of Groups 2 and 11 of the periodic table of the elements,
M2 may be a metal element other than Li, and may be selected from elements of Group 1 of the periodic table of the elements,
M3 may be an element selected from elements of Group 17 of the periodic table of the elements, 4≤a≤8, 0≤x≤0.5, 0≤w≤0.5, 3≤y≤7, and 0≤z≤2.

In one or more embodiments, the first solid electrolyte layer of the solid electrolyte layer may be disposed adjacent to the cathode layer.

The first solid electrolyte layer may include a solid electrolyte represented by Formula 1, and the solid electrolyte has suitable characteristics in terms of lithium ion conductivity, oxidation stability, and ambient stability, so that an all solid secondary battery having improved stability and cycle characteristics may be provided by including the first electrolyte layer.

In a lithium-sulfur battery utilizing LiPSCI as a sulfide-based electrolyte in the art, high-rate characteristics thereof may be degraded due to low ion conductivity. The ion conductivity may be improved through a sulfide-based electrolyte in which Li cations are partially substituted.

The solid electrolyte represented by Formula 1 may include, in some of lithium sites in crystals thereof, Na, K, Fe, Mg, Ca, Ag, Cu, Zr, Zn, or one or more combinations thereof, and thus the ion conductivity of lithium ions may be improved in a compound, and the activation energy may be reduced. The ion conductivity is a very important factor in determining lifespan and high-rate characteristics of an all solid secondary battery, and utilization of the aforementioned solid electrolyte layer may be able not only to increase ion conductivity of lithium sulfide, which is insufficient in the cathode, but also to increase a lithium sulfide amount, thereby preparing an all solid secondary battery having improved energy density.

In one or more embodiments, the solid electrolyte represented by Formula 1 may be represented by Formula 1-1:

**Formula 1-1** **(Li_{1-b}Cu_{b})_{7-z}PS_{6-z}M3_{z},**

wherein, in Formula 1-1, M3 may be fluorine (F), chlorine (Cl), bromine (Br), or iodine (I), 0≤b≤0.05, and 0≤z≤2.

In Formulae 1, 2, and 1-1, M3 may be F, Cl, Br, or I. In Formula 2, M1 may be magnesium (Mg), silver (Ag), copper (Cu), hafnium (Hf), indium (In), titanium (Ti), lead (Pb), antimony (Sb), iron (Fe), zirconium (Zr), zinc (Zn), chromium (Cr), boron (B), tin (Sn), germanium (Ge), silicon (Si), tantalum (Ta), niobium (Nb), vanadium (V), gallium (Ga), aluminum (Al), arsenic (As), or one or more combinations thereof, and M2 may be Na, K, or a combination thereof.

The solid electrolyte of Formula 1-1 may include copper substituted for some of lithium sites in crystals, so that the ion conductivity of lithium ions in a compound may be improved and the activation energy may be reduced, and thus a secondary battery having improved yield characteristics and improved initial capacity may be prepared. Using such a solid electrolyte having improved ion conductivity as a cathode electrolyte may also improve the ion conductivity of a cathode including a lithium sulfide-containing complex, and increase the energy density by increasing a relative amount of lithium sulfide due to a reduction in the amount of a cathode electrolyte.

In one or more embodiments, thicknesses of the first solid electrolyte layer and the second solid electrolyte may each be in a range of about 10 µm to about 200 µm, and a thickness ratio of the first solid electrolyte layer to the second solid electrolyte may be in a range of about 1:1 to about 6:4. If (e.g., when) the thicknesses and the thickness ratio of the first solid electrolyte layer and the second solid electrolyte are within the ranges above, an all solid secondary battery having improved energy density and improved high-rate characteristics may be provided.

In one or more embodiments, the solid electrolyte layer may further include a third solid electrolyte layer that includes a third sulfide-based solid electrolyte different from the first sulfide-based solid electrolyte (i.e., the solid electrolyte represented by Formula 1).

The third sulfide-based solid electrolyte may be represented by Formula 3, and the third solid electrolyte layer may be disposed on the second solid electrolyte layer. As a result, the solid electrolyte layer may have a three-layer structure.

**Formula 3** **(Li_{1-b}M_{b})_{7-z}PS_{6-z}M4_{z}**

In Formula 3, M may be Na, K, Fe, Mg, Ca, Ag, Cu, Zr, Zn, or one or more combinations thereof,
M4 may be an element selected from elements of Group 17 of the periodic table of the elements,
0≤b≤0.05, and 0≤z≤2.

In some embodiments, the third sulfide-based solid electrolyte represented by Formula 3 may be represented by Formula 3-1:

**Formula 3-1** **(Li_{1-b}Cu_{b})_{7-z}PS_{6-z}M4_{z},**

wherein, in Formula 3-1, M4 may be F, Cl, Br, or I, 0≤b≤0.05, and 0≤z≤2.

In one or more embodiments, the first sulfide-based solid electrolyte and the second sulfide-based solid electrolyte may each include a large-diameter solid electrolyte (in a form of particles) having an average particle diameter of about 3 micrometers (µm) to about 10 µm and a small-diameter solid electrolyte (in a form of particles) having an average particle diameter of about 1 micrometer (µm) to about 3 µm.

A mixing weight ratio of the large-diameter solid electrolyte and the small-diameter solid electrolyte may be in a range of about 10:90 to about 90:10. As such, the first sulfide-based solid electrolyte and the second sulfide-based solid electrolyte in which the large-diameter solid electrolyte and the small-diameter solid electrolyte are mixed may suppress or reduce generation of defects, such as cracks in the solid electrolyte layer, by filling pinholes in the solid electrolyte. In this regard, the cycle characteristics of the all solid secondary battery may be further improved. For example, the high-rate characteristics, lifespan characteristics, and/or the like of the all solid secondary battery may be improved.

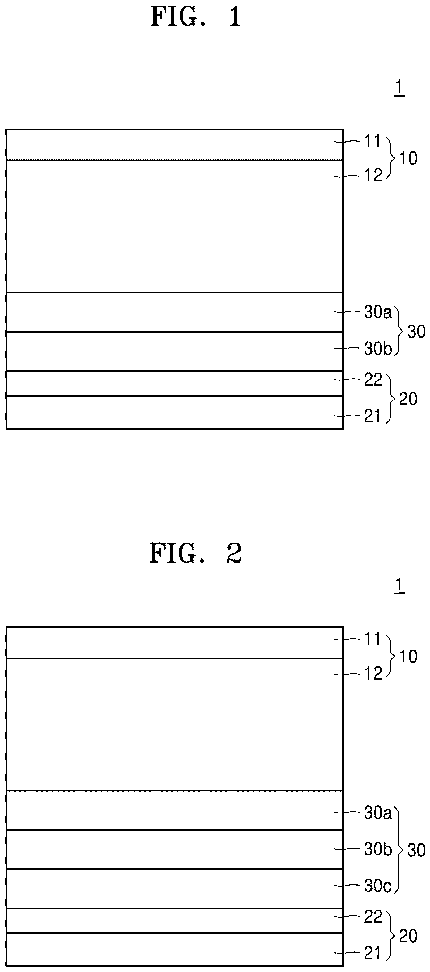

Referring to FIG. 1 and FIG. 2, in one or more embodiments, a solid battery 1 may include: a cathode layer 10; an anode layer 20; and a solid electrolyte layer 30 between the cathode layer 10 and the anode layer 20.

In one or more embodiments, the solid electrolyte layer 30 may include a first solid electrolyte layer 30a and a second solid electrolyte layer 30b, as shown in FIG. 1.

The cathode layer 10 may include: a cathode current collector 11; and a cathode active material layer 12 on one surface (or side) or both (e.g., two opposite) surfaces (or sides) of the cathode current collector 11, wherein the cathode active material layer 12 may include a Li₂S-containing composite. The anode layer 20 may include: an anode current collector 21; and a first anode active material layer 22 on one surface (or side) or both (e.g., two opposite) surfaces (or sides) of the anode current collector 21.

In some embodiments, the solid electrolyte layer 30 may include the first solid electrolyte layer 30a, the second solid electrolyte layer 30b, and a third solid electrolyte layer 30c.

A total thickness of the solid electrolyte layer 30 may be in a range of about 10 µm to about 200 µm, a thickness of the first solid electrolyte layer 30a and a thickness of the second solid electrolyte layer 30b may each be in a range of about 50 µm to about 80 µm. A thickness ratio of the first solid electrolyte layer 30a to the second solid electrolyte layer 30b may be in a range of about 10:90 to about 90:10, for example, about 60:40 to about 40:60.

In one or more embodiments, the cathode layer 10 may include a solid electrolyte represented by Formula 1:

**Formula 1** **(Li_{1-b}M0_{b})_{7-z}PS_{6-z}M3_{z},**

wherein, in Formula 1, M0 may be Na, K, Fe, Mg, Ca, Ag, Cu, Zr, Zn, or one or more combinations thereof, M3 may be an element selected from elements of Group 17 of the periodic table of the elements, 0≤b≤0.05, and 0≤z≤2.

In some embodiments, the solid electrolyte represented by Formula 1 may be, for example, represented by Formula 1-1:

**Formula 1-1** **(Li_{1-b}Cu_{b})_{7-z}PS_{6-z}M3_{z},**

wherein, in Formula 1-1, M3 may be an element selected from elements of Group 17 of the periodic table of the elements, 0≤b≤0.05, and 0≤z≤2.

The solid electrolytes represented by Formulae 1 and 1-1 may provide improved lithium ion conductivity. In one or more embodiments, the solid electrolyte represented by Formula 1 may provide ion conductivity of 1.0 mS/cm or more, 1.5 mS/cm or more, 2.0 mS/cm or more, 2.5 mS/cm or more, 3.0 mS/cm or more, 3.5 mS/cm or more, 4.0 mS/cm or more, or 5.0 mS/cm or more, at room temperature, for example, about 25 °C. in some embodiments, the solid electrolyte represented by Formula 1 may provide ion conductivity in a range of about 1.0 mS/cm to about 500 mS/cm, about 1.5 mS/cm to about 400 mS/cm, about 2.0 mS/cm to about 300 mS/cm, about 2.5 mS/cm to about 200 mS/cm, about 3.0 mS/cm to about 150 mS/cm, about 3.5 mS/cm to about 100 mS/cm, about 4.0 mS/cm to about 100 mS/cm, or about 5.0 mS/cm to about 100 mS/cm, at room temperature, for example, about 25 °C. In the all solid secondary battery 1 including: a cathode; an anode; and the solid electrolyte represented by Formula 1 between the cathode and the anode, the ion transfer between the cathode and the anode may be effectively carried out so that the internal resistance between the cathode and the anode may be reduced. The ion conductivity may be measured by utilizing a direct current (DC) polarization method. In some embodiments, the ion conductivity may be measured based on a complex impedance.

### Solid electrolyte layer: Solid electrolyte

The solid electrolyte may include, for example, a sulfide-based solid electrolyte, an oxide-based solid electrolyte, a polymer solid electrolyte, or one or more combinations thereof.

In some embodiments, the solid electrolyte may be, for example, a sulfide-based solid electrolyte. The sulfide-based solid electrolyte may include, for example, one or more selected from among: Li₂S-P₂S₅, Li₂S-P₂S₅-LiX (where X is a halogen), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z may be one of Ge, Zn, and Ga), Li₂S-GeS₂, Li₂S-SiS₂-Li₃PO₄, Li₂S-SiS₂-LiₚMO_{q} (where p and q are positive numbers, and M may be one of P, Si, Ge, B, Al, Ga, and In), Li₇₋ₓPS₆₋ₓClₓ, (where 0≤x≤2), Li₇₋ₓPS₆₋ₓBrₓ, (where 0≤x≤2), and Li₇₋ₓPS₆₋ₓIₓ (where 0≤x≤2). The sulfide-based solid electrolyte may be, for example, prepared by treating a starting material, such as Li₂S, P₂S₅, and/or the like, by a melting quenching method, a mechanical milling method, and/or the like. Also, after such treatment, heat treatment may be performed thereon. The solid electrolyte may be amorphous or crystalline, or may be in a mixed state. In some embodiments, the solid electrolyte may include, for example, sulfur (S), phosphorus (P), and lithium (Li), at least as a constituent element among the aforementioned sulfide-based solid electrolyte material. For example, in some embodiments, the solid electrolyte may be a material containing Li₂S-P₂S₅. If (e.g., when) a material containing Li₂S-P₂S₅ is utilized as the sulfide-based solid electrolyte material for forming the solid electrolyte, a mixing molar ratio of Li₂S to P₂S₅ (Li₂S:P₂S₅) may be, for example, in a range of about 20:80 to about 90:10, about 25:75 to about 90:10, about 30:70 to about 70:30, or about 40:60 to about 60:40.

In one or more embodiments, the sulfide-based solid electrolyte may include, for example, an argyrodite-type or kind (e.g., argyrodite) solid electrolyte represented by Formula 4:

**Formula 4** **Li⁺₁₂₋ₙ₋ₓAⁿ⁺X²⁻₆₋ₓY⁻ₓ,**

wherein, in Formula 4, A may be P, As, Ge, Ga, Sb, Si, Sn, Al, In, Ti, V, Nb, or Ta, X may be S, Se, or Te, Y may be Cl, Br, I, F, CN, OCN, SCN, or N₃, 1≤n≤5, and 0≤x≤2. In some embodiments, the sulfide-based solid electrolyte may be, for example, an argyrodite-type or kind compound including one or more selected from among Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2). In some embodiments, the sulfide-based solid electrolyte may be, for example, an argyrodite-type or kind compound including at least one selected from among Li₆PS₅Cl, Li₆PS₅Br, and LisPSsl.

The density of the argyrodite-type or kind solid electrolyte may be in a range of about 1.5 g/cc to about 2.0 g/cc. If (e.g., when) the density of the argyrodite-type or kind solid electrolyte is 1.5 g/cc or more, the internal resistance of the all solid secondary battery may be reduced, and accordingly, the penetration of Li into the solid electrolyte layer may be effectively suppressed or reduced.

The oxide-based solid electrolyte may include, for example, at least one selected from among Li_{1+x+y}AlₓTi₂₋ₓSi_{y}P_{3-y}O₁₂ (where 0<x<2 and 0≤y<3), BaTiOs, Pb(Zr,Ti)O₃(PZT), Pb₁₋ₓLaₓZr_{1-y} Ti_{y}O₃(PLZT) (where 0≤x<1 and 0≤y<1), Pb(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (where 0<x<2 and 0<y<3), LiₓAl_{y}Ti_{z}(PO₄)₃ (where 0<x<2, 0<y<1, and 0<z<3), Li_{1+x+y}(Al, Ga)ₓ(Ti, Ge)₂₋ₓSi_{y}P_{3-y}O₁₂ (where 0≤x≤1 and 0≤y≤1), LiₓLa_{y}TiO₃ (where 0<x<2 and 0<y<3), Li₂O, LiOH, Li₂CO₃, LiAlO₂, Li₂O-Al₂O₃-SiO₂-P₂O₅-TiO₂-GeO₂, and Li₃₊ₓLa₃M₂O₁₂ (where M is Te, Nb, or Zr, and 0≤x≤10). The oxide-based solid electrolyte may be prepared by, for example, a sintering method and/or the like.

In some embodiments, the oxide-based solid electrolyte may include, for example, a garnet-type or kind solid electrolyte selected from among Li₇La₃Zr₂O₁₂(LLZO) and Li₃₊ₓLa₃Zr₂₋ₐMₐO₁₂ (M-doped LLZO)(where M may be Ga, W, Nb, Ta, or Al, 0<a<2, and 0≤x≤10).

The polymer solid electrolyte may include, for example, a mixture of a lithium salt and a polymer or a polymer including an ion-conducting functional group. The polymer solid electrolyte may be, for example, a polymer electrolyte not containing a liquid electrolyte. The polymer of the polymer solid electrolyte may include, for example, polyethylene oxide (PEO), polyvinylidene fluoride (PVDF), vinylidene fluoride-hexafluoropropylene (PVDF-HFP), a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA), polyethylene glycol(PEG), polyacrylonitrile (PAN), polytetrafluoro ethylene (PTFE), polyethylene dioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone)(SPEEK), sulfonated poly(arylene ether ketone ketone sulfone)(SPAEKKS), sulfonated poly(aryl ether ketone)(SPAEK), poly[bis(benzimidazobenzisoquinolinones)](SPBIBI), poly(styrene sulfonate)(PSS), lithium 9,10-diphenylanthracene-2-sulfonate (DPASLi⁺), or one or more combinations thereof, but embodiments of the present disclosure are not limited thereto. Any material available as the polymer electrolyte in the art may be utilized. For utilization as the lithium salt, any material available in the art as a lithium salt may be utilized. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂)(where x and y are each between 1 to 20), LiCl, Lil, or any mixture thereof.

The gel electrolyte may be, for example, a gel polymer electrolyte. The gel polymer electrolyte may include, for example, a liquid electrolyte and a polymer, or may be, for example, an electrolyte including an organic solvent and a polymer including an ion-conducting functional group. The liquid electrolyte may contain, for example, an ionic liquid, a mixture of a lithium salt and an organic solvent, a mixture of an ionic liquid and an organic solvent, or a mixture of a lithium salt, an ionic liquid, and an organic solvent. The polymer may be selected from polymers utilized in solid polymer electrolytes. The organic solvent may be selected from organic solvents utilized in liquid electrolytes. The lithium salt may be selected from lithium salts utilized in solid polymer electrolytes. The ionic liquid may have a melting point below the room temperature, and may contain a salt in a liquid state at room temperature or a molten salt at room temperature, each consisting of only ions. The ionic liquid may include, for example, one or more selected from compounds including: a) one or more cations selected from among an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, and any mixture thereof; and b) one or more anions selected from among BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, SO₄²⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻. In some embodiments, a gel polymer electrolyte may be formed by immersing a polymer solid electrolyte in an electrolyte solution within a lithium battery. In some embodiments, the gel electrolyte may further include inorganic particles.

### Solid electrolyte layer: Binder

In one or more embodiments, the solid electrolyte layer 30 may include, for example, a binder. The binder included in the solid electrolyte layer 30 may include, for example, a styrene-butadiene rubber (SBR), polytetrafluoroethylene (PTFE), polyvinylidene fluoride (PVDF), polyethylene, and/or the like, but embodiments of the present disclosure are not limited thereto. Any material available as a binder in the art may be utilized. The binder included in the solid electrolyte layer 30 may be the same as or different from binders included in the cathode active material layer 12 and the anode active material layer 22. In some embodiments, the binder may not be provided and utilized.

An amount of the binder included in the solid electrolyte layer 30 may be, for example, about 0.1 wt% to about 10 wt%, about 0.1 wt% to about 5 wt%, about 0.1 wt% to about 3 wt%, about 0.1 wt% to about 1 wt%, about 0 wt% to about 0.5 wt%, or about 0 wt% to about 0.1 wt%, based on a total weight of the solid electrolyte layer 30.

### Cathode layer

### Cathode layer: Cathode active material

Referring to FIGs. 1 to 6, in one or more embodiments, the cathode layer 10 may include: a cathode current collector 11; and a cathode active material layer 12 disposed on one surface (or side) or both (e.g., two opposite) surfaces (or sides) of the cathode current collector 11. The cathode active material layer 12 may include a M₂S-containing composite as a cathode active material (e.g., a composite cathode active material).

The M₂S-containing composite may include a composite of M₂S and a carbon-based material, a composite of M₂S, a carbon-based material, and a solid electrolyte, a composite of M₂S and a solid electrolyte, a composite of M₂S, a carbon-based material, and an alkali metal salt, a composite of M₂S and an alkali metal salt, a composite of M₂S and a metal carbide, a composite of M₂S, a carbon-based material, and a metal carbide, a composite of M₂S and a metal nitride, a composite of M₂S, a carbon-based material, and a metal nitride, or any combination thereof.

The composite cathode active material according to one or more embodiments may include: M₂S; and an alkali metal salt, wherein M may be an alkali metal, and the alkali metal may be Li or Na.

In one or more embodiments, the M₂S-containing composite may be a Li₂S-containing composite, and the Li₂S-containing composite may include a composite of Li₂S and a carbon-based material, a composite of Li₂S, a carbon-based material, and a solid electrolyte, a composite of Li₂S and a solid electrolyte, a composite of Li₂S, a carbon-based material, and a lithium salt, a composite of Li₂S and a lithium salt, a composite of Li₂S and a metal carbide, a composite of Li₂S, a carbon-based material, and a metal carbide, a composite of Li₂S and a metal nitride, a composite of Li₂S, a carbon-based material, and a metal nitride, or any combination thereof.

The composite cathode active material according to one or more embodiments may include a composite (cathode active material) of M₂S, an alkali metal salt, and a carbon-based material, wherein M may be an alkali metal. The alkali metal may be lithium (Li) or sodium (Na). M₂S may be, for example, Li₂S or Na₂S. in one or more embodiments, a size of M₂S crystallites obtained from an X-ray diffraction (XRD) spectrum of the composite may be less than or equal to about 9.9 nanometers (nm). In some embodiments, the size of M₂S crystallites obtained from the XRD spectrum of the composite may be, for example, about 9.85 nm or less, about 9.83 nm or less, about 9.8 nm or less, about 9.5 nm or less, about 9.0 nm or less, or about 8.5 nm or less. In one or more embodiments, the composite may include a solid solution of M₂S and the alkali metal salt within the ranges above. In some embodiments, the size of M₂S crystallites obtained from an X-ray diffraction (XRD) spectrum of the composite may be, for example, in a range of about 1 nm to less than 9.9 nm, about 1 nm to about 9.8 nm, about 2 nm to about 9.8 nm, about 2 nm to about 9.5 nm, about 2 nm to about 9.0 nm, about 2 nm to about 8.5 nm, or about 3 nm to about 8.5 nm. In one or more embodiments, the composite may include a solid solution of M₂S and the alkali metal salt within the ranges above.

If (e.g., when) M₂S forms a composite with the alkali metal salt and carbon-based material, the ion conductivity and electronic conductivity of the M₂S may be improved concurrently (e.g., simultaneously). If (e.g., when) the composite includes the alkali metal salt, the ion conductivity of the composite cathode active material may be improved, and the internal resistance of a cathode and a lithium battery that include the composite cathode active material may be reduced. If (e.g., when) the composite includes the carbon-based material, the electronic conductivity of the composite cathode active material may be improved, and the internal resistance of a cathode and a lithium battery that include the composite cathode active material may be reduced.

The composite may include M₂S crystallites, and the volume change of the M₂S crystallites during charging and discharging may be alleviated by reducing the size of the M₂S crystallites to 21 nm or less. For example, as the size of the M₂S crystallites decreases, the volume change affected by a single M₂S crystallite decreases, and thus the overall volume change of the composite during charging and discharging may be alleviated. For example, as the size of the M₂S crystallites decreases, the grain boundary among a plurality of M₂S crystallites may be able to more easily accommodate the volume change of the M₂S crystallites during charging and discharging, and thus the volume change of the composite during charging and discharging may be alleviated. In this regard, the possibility of defects, such as cracks and/or the like caused by the volume change during charging and discharging, during charging and discharging of the composite may be reduced. If (e.g., when) the composite cathode active material includes the aforementioned composite, the cycle characteristics of a lithium battery including the composite cathode active material may be improved. For example, the lifespan characteristics of a lithium battery including the aforementioned composite cathode active material may be improved.

If (e.g., when) the composite includes the M₂S crystallites and the size of the M₂S crystallites is reduced to 21 nm or less, a contact area between the M₂S crystallites and the alkali metal salt and/or the carbon-based material may be further increased. If (e.g., when) the contact area between the M₂S crystallites and the alkali metal salt and/or the carbon-based material increases, the ion conductivity of the composite and/or the battery conductivity may be further improved. If (e.g., when) the composite cathode active material includes the aforementioned composite, the reversibility of an electrode reaction in a battery including the composite cathode active material may be improved. As a result, the specific capacity of the composite cathode active material may be increased.

If (e.g., when) the composite includes a solid solution of M₂S and alkali metal salt, the ion conductivity of the composite may be improved. For example, a solid solution of M₂S and the alkali metal salt includes alkali metal ions disposed in the M₂S crystallites, and thus the ion conductivity of the solid solution of M₂S and the alkali metal salt may be improved compared to the ion conductivity of the M₂S. As a result, the ion conductivity of the composite may be improved, and the internal resistance of the composite may be reduced. If (e.g., when) the composite cathode active material includes the aforementioned composite, the cycle characteristics of a lithium battery including the composite cathode active material may be improved. For example, the high-rate characteristics of a secondary battery including the aforementioned composite cathode active material may be improved.

The Li₂S-alkali metal salt-carbon-based material composite may be distinguished from a simple mixture of Li₂S, an alkali metal salt, and a carbon-based material. The simple mixture of Li₂S, the alkali metal salt, and the carbon-based material may fail to maintain a dense interface among the Li₂S, the alkali metal salt, and the carbon-based material, resulting in high interfacial resistance. As a result, the lifespan characteristics of a secondary battery may be degraded.

In one or more embodiments, the composite may include M₂S. The M₂S may have a high theoretical capacity, and thus an all solid secondary battery having high energy density may be provided. However, because the M₂S has low ion conductivity and/or electronic conductivity, the M₂S may form a complex with an alkali metal salt and a carbon-based material to overcome these shortcomings. In the composite, an amount of the M₂S may be, for example, in a range of about 10 wt% to about 80 wt% or about 20 wt% to about 70 wt%, based on the total weight of the composite, in some embodiments, the amount of the M₂S may be in a range of about 30 wt% to about 60 wt% or about 40 wt% to about 60 wt%, based on the total weight of the composite. If (e.g., when) the amount of the M₂S excessively increases, the ion conductivity and/or electronic conductivity of the composite may not be easily improved. If (e.g., when) the amount of the M₂S is excessively low, the energy density of the composite may be reduced.

The composite may include an alkali metal salt. The alkali metal salt may be, for example, a sulfur (S)-free compound. The alkali metal salt may be, for example, a binary compound or a ternary compound, in some embodiments, the alkali metal salt may be, for example, a binary compound including (e.g., consisting of) an alkali metal and one element selected from elements of Groups 13 to 17 of the periodic table of the elements. in some embodiments, the alkali metal salt may be, for example, a ternary compound including (e.g., consisting of) an alkali metal and two elements selected from elements of Groups 13 to 17 of the periodic table of the elements.

In some embodiments, the alkali metal salt may be, for example, a lithium salt. The binary compound including a lithium salt may include, for example, Lil, LiBr, LiCl, LiF, LiH, Li₂O, Li₂Se, Li₂Te, LisN, LisP, LisAs, LisSb, Li₃Al₂, LiBs, or any combination thereof. The ternary compound including a lithium salt may include, for example, Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, or any combination thereof. If (e.g., when) the composite includes such a lithium salt, the ion conductivity of the composite may be further improved. Such a lithium salt may, for example, more easily form a solid solution with Li₂S in the composite.

In some embodiments, the alkali metal salt may be, for example, a sodium salt. The binary compound including a sodium salt may include, for example, Nal, NaBr, NaCl, NaF, Na₂O, Na₂Se, Na₃N, Na₃P, Na₃As, Na₃Sb, Na₃Al₂, NaB₃, or any combination thereof. The ternary compound including a sodium salt may include, for example, Na₃OCl, NaBF₄, NaPF₆, NaAsF₆, NaClO₄, NaNO₃, NaAlO₂, NaAlCl₄, NaNO₃, Na₂CO₃, NaBH₄, Na₂SO₄, Na₃BO₃, Na₃PO₄, Na₄NCl, Na₅NCl₂, Na₃BN₂, or any combination thereof. If (e.g., when) the composite includes such a sodium salt, the ion conductivity of the composite may be further improved. Such a sodium salt may, for example, more easily form a solid solution with Na₂S in the composite.

An amount of the alkali metal salt in the composite may be in a range of about 1 wt% to about 40 wt%, about 5 wt% to about 35 wt%, about 10 wt% to about 35 wt%, about 15 wt% to about 35 wt%, about 20 wt% to about 35 wt%, or about 25 wt% to about 35 wt%, based on the total weight of the composite. If (e.g., when) the amount of the alkali metal salt excessively increases, the energy density of a secondary battery may be reduced. If (e.g., when) the amount of the alkali metal salt is excessively low, the ion conductivity of the composite may decrease, and the internal resistance of the composite cathode active material may then increase. As a result, the cycle characteristics of a secondary battery may be degraded.

In one or more embodiments, the molar ratio of the M₂S to the alkali metal salt in the composite may be, for example, in a range of about 50:50 to about 95:5, about 60:40 to about 95:5, about 60:40 to about 90:10, about 65:35 to about 90:10, about 65:35 to about 85:15, or about 70:30 to about 85:15. In some embodiments, the molar ratio of the M₂S to the alkali metal salt in the composite may be, for example, in a range of about 50:50 to about 95:5, about 50:50 to about 90:10, about 50:50 to about 85:15, about 50:50 to about 80:20, about 50:50 to about 75:25, or about 50:50 to about 70:30. If (e.g., when) the molar ratio of the M₂S to the alkali metal salt is within the ranges above, the cycle characteristics of a secondary battery including the composite cathode active material may be further improved. If (e.g., when) the molar ratio of the M₂S to the alkali metal salt is excessively high, the effect of improving the ion conductivity by the alkali metal salt may be negligible. If (e.g., when) the molar ratio of the M₂S to the alkali metal salt is excessively low, the energy density of a secondary battery including the composite cathode active material may be degraded.

In one or more embodiments, a molar ratio of the Li₂S to the lithium salt in the composite may be, for example, in a range of about 50:50 to about 95:5, about 60:40 to about 95:5, about 60:40 to about 90:10, about 65:35 to about 90:10, about 65:35 to about 85:15, or about 70:30 to about 85:15. In some embodiments, the molar ratio of the Li₂S to the lithium salt in the composite may be, for example, in a range of about 50:50 to about 95:5, about 50:50 to about 90:10, about 50:50 to about 85:15, about 50:50 to about 80:20, about 50:50 to about 75:25, or about 50:50 to about 70:30. If (e.g., when) the molar ratio of the Li₂S to the lithium salt is within the ranges above, the cycle characteristics of a lithium battery including the composite cathode active material may be further improved. If (e.g., when) the molar ratio of the Li₂S to the lithium salt is excessively high, the effect of improving the ion conductivity by the lithium salt may be negligible. If (e.g., when) the molar ratio of the Li₂S to the lithium salt is excessively low, the energy density of a lithium battery including the composite cathode active material may be degraded.

In one or more embodiments, a molar ratio of the Na₂S to the sodium salt in the composite may be, for example, in a range of about 50:50 to about 95:5, about 60:40 to about 95:5, about 60:40 to about 90:10, about 65:35 to about 90:10, about 65:35 to about 85:15, or about 70:30 to about 85:15. In some embodiments, the molar ratio of the Na₂S to the sodium salt in the composite may be, for example, in a range of about 50:50 to about 95:5, about 50:50 to about 90:10, about 50:50 to about 85:15, about 50:50 to about 80:20, about 50:50 to about 75:25, or about 50:50 to about 70:30. If (e.g., when) the molar ratio of the Na₂S to the sodium salt is within the ranges above, the cycle characteristics of a sodium battery including the composite cathode active material may be further improved. If (e.g., when) the molar ratio of the Na₂S to the sodium salt is excessively high, the effect of improving the ion conductivity by the sodium salt may be negligible. If (e.g., when) the molar ratio of the Na₂S to the sodium salt is excessively low, the energy density of a sodium battery including the composite cathode active material may be degraded.

In one or more embodiments, the composite includes a carbon-based material. As the carbon-based material, e.g., a carbon atom-containing material, any material utilized as a conductive material in the art may be utilized. The carbon-based material may include, for example, crystalline carbon, amorphous carbon, or a combination thereof. The carbon-based material may be, for example, a sintered product of a carbon precursor. In some embodiments, the carbon-based material may be, for example, a carbon-based nanostructure. The carbon nanostructure may be, for example, a one-dimensional carbon nanostructure, a two-dimensional carbon nanostructure, a three-dimensional carbon nanostructure, or one or more combinations thereof. In one or more embodiments, the carbon nanostructure may be, for example, carbon nanotubes, carbon nanofibers, carbon nanobelts, carbon nanorods, graphene, or one or more combinations thereof. In some embodiments, the carbon-based material may be, for example, a porous carbon-based material or a non-porous carbon-based material. The porous carbon-based material may include, for example, periodic and ordered two-dimensional or three-dimensional pores. The porous carbon-based material may be: for example, carbon black, such as Ketjen black, acetylene black, Denka black, thermal black, channel black, etc.; graphite; activated carbon; or one or more combinations thereof. The carbon-based material may be, for example, in the form of particles, sheets, flakes, etc., but the form is not limited thereto. Any material available as the carbon-based material in the art may be utilized.

An amount of the carbon-based material included in the composite may be, for example, in a range of about 1 wt% to about 20 wt%, about 5 wt% to about 20 wt%, or about 10 wt% to about 20 wt%, based on the total weight of the composite. If (e.g., when) the amount of the carbon-based material excessively increases, the energy density of a secondary battery may be reduced. If (e.g., when) the amount of the carbon-based material excessively decreases, the electronic conductivity of the composite may decrease, and the internal resistance of the composite cathode active material may then increase. As a result, the cycle characteristics of a secondary battery may be degraded.

In one or more embodiments, in an XRD spectrum of the composite, for example, a first peak appearing at a diffraction angle 2θ of 27° ± 2.0° corresponding to a (111) crystal surface of the M₂S may have a first diffraction angle, and in an XRD spectrum of the M₂S utilized to prepare the composite, a second peak appearing at a diffraction angle 2θ of 27° ± 2.0° corresponding to a (111) crystal surface of the M₂S may have a second diffraction angle, wherein the first diffraction angle may be smaller than the second diffraction angle. For example, a position of the first peak may be shifted to a low angle compared to a position of the second peak. The M₂S-alkali metal salt-carbon-based material composite may then have a reduced crystallite size compared to the M₂S utilized in the preparation of the composite. The reduced crystallite size of the M₂S-alkali metal salt-carbon-based material composite may lead to a small change in volume of the crystallites during charging and discharging, and thus the volume change of the composite including a plurality of crystallites during charging and discharging may be alleviated. In this regard, the occurrence of defects, such as cracks and/or the like, of the composite cathode active material including the composite during charging and discharging may be suppressed or reduced. As a result, the cycle characteristics of a secondary battery including the composite cathode active material may be improved.

In the XRD spectrum of the composite, for example, the first peak appearing at the diffraction angle 2θ of 27° ± 2.0° corresponding to the (111) crystal surface of the M₂S may have a first full width at half maximum (FWHM1), and in the XRD spectrum of the M₂S utilized to prepare the composite, the second peak appearing at the diffraction angle 2θ of 27° ± 2.0° corresponding to the (111) crystal surface of the M₂S may have a second full width at half maximum (FWHM2), wherein the FWHM1 may be greater than the FWHM2. The M₂S-alkali metal salt-carbon-based material composite may then have an increased lattice strain compared to the M₂S utilized in the preparation of the composite. For example, if (e.g., when) the M₂S and the alkali metal salt form a solid solution, the M₂S-alkali metal salt-carbon-based material composite may have an increased lattice strain. The M₂S-alkali metal salt-carbon-based material composite may have increased FWHM compared to that of the M₂S utilized in the preparation of the composite, and accordingly, the ion (e.g., ionic) conductivity of the composite cathode active material including the composite may be further improved. The internal resistance of a secondary battery including the composite cathode active material may be reduced, and the cycle characteristics of the same may be improved.

In one or more embodiments, the FWHM1 may be, for example, 1° or greater, 1.05° or greater, 1.10° or greater, or 1.15° or greater. If (e.g., when) the composite has the FWHM1 within the ranges above, the ion conductivity of the composite cathode active material including the composite may be further improved. The internal resistance of a secondary battery including the composite cathode active material may be reduced, and the cycle characteristics of the second battery may be improved.

In one or more embodiments, the Mohs hardness of each of the alkali metal salt and the carbon-based material may be greater than that of the M₂S. The Mohs hardness of the M₂S may be, for example, 0.6 or less. The Mohs hardness of the Li₂S may be, for example, 0.6 or less.

The Mohs hardness of the alkali metal salt may be 0.7 or greater, 0.8 or greater, 0.9 or greater, 1.0 or greater, 1.5 or greater, or 2.0 or greater. If (e.g., when) the alkali metal salt has the Mohs hardness within the ranged above, the M₂S may be more easily pulverized during a milling process, and a solid solution of the M₂S and the alkali metal salt may be more easily formed. The Mohs hardness of the LiI may be, for example, 2.0. The Mohs hardness of the Nal may be, for example, 2.1.

The Mohs hardness of the carbon-based material may be 0.7 or greater, 0.8 or greater, 0.9 or greater, 1.0 or greater, 1.2 or greater, or 1.5 or greater. If (e.g., when) the carbon-based material has the Mohs hardness within the ranged above, the M₂S may be more easily pulverized during a milling process, and the M₂S-alkali metal salt-carbon-based material composite may be more easily formed. The Mohs hardness of carbon nanofiber (CNF) may be, for example, 1.5.

In one or more embodiments, a particle size of the composite cathode active material, i.e., the particle size of the composite, may be, for example, 2 µm or less, 1.5 µm or less, or 1 µm or less. In some embodiments, the particle size of the composite may be, for example, in a range of about 0.1 µm to 2 µm, about 0.1 µm to about 1.5 µm, or about 0.1 µm to about 1 µm. If (e.g., when) the particle size of the composite is within the ranges above, the volume change during charging and discharging may be suppressed or reduced, and accordingly, the deterioration of the composite cathode active material including the composite may be suppressed or reduced. If (e.g., when) the particle size of the composite excessively increases, the volume change of the composite during charging and discharging may increase, and accordingly, the deterioration of the composite cathode active material including the composite may be accelerated. As a result, the cycle characteristics of a secondary battery including the composite cathode active material may be degraded.

In this regard, a secondary battery including the composite cathode active material may have improved cycle characteristics, for example improved lifespan characteristics. The particle size of the composite, e.g., a particle diameter of the composite, may be measured by utilizing, for example, a laser diffraction method, a scanning electron microscope, and/or the like. The particle size of the composite may be, for example, an arithmetic average of the particle diameters of a plurality of particles measured by utilizing a software from images obtained by a scanning electron microscope.

In one or more embodiments, the composite may include the carbon-based material, and the carbon-based material may include, for example, a fibrous carbon-based material. If (e.g., when) the composite includes such a fibrous carbon-based material, the electronic conductivity of the composite may be further improved. If (e.g., when) the composite includes the fibrous carbon-based material, the electronic conduction from the surface of the composite (e.g., composite particles) to the inner part of the composite (e.g., composite particles) may be easily facilitated. The internal resistance of the composite cathode active material including the composite may be reduced, and accordingly, the cycle characteristics of a secondary battery including the composite cathode active material may be further improved.

In one or more embodiments, an aspect ratio of the fibrous carbon-based material may be, for example, 2 or greater, 3 or greater, 4 or greater, 5 or greater, 10 or greater, or 20 or greater. In some embodiments, the aspect ratio of the fibrous carbon-based material may be, for example, in a range of about 2 to about 30, about 3 to about 30, about 4 to about 30, about 5 to about 30, about 10 to about 30, or about 20 to about 30. In some embodiments, the aspect ratio of the fibrous carbon-based material may be, for example, in a range of about 2 to about 30, about 2 to about 20, about 2 to about 10, about 2 to about 8, about 2 to about 5, or about 2 to about 4. If (e.g., when) the aspect ratio of the fibrous carbon-based material is within the ranges above, the overall electronic conductivity of the composite may be improved, and accordingly, an imbalance of the local electronic conductivity in the composite may be further alleviated.

In one or more embodiments, the fibrous carbon-based material may include, for example, a carbon nanostructure. The carbon nanostructure may include, for example, carbon nanofibers (CNFs), carbon nanotubes (CNTs), carbon nanobelts, carbon nanorods, or any combination thereof.

The carbon nanostructure may form a primary carbon nanostructure (e.g., a primary particle or structure) including (e.g., consisting of) one carbon nanostructure and a secondary carbon nanostructure (e.g., a secondary particle or structure) including (e.g., consisting of) a plurality of carbon nanostructures aggregated.

A diameter of the primary carbon nanostructure (e.g., a cross-sectional diameter if in a form of nanotubes) may be, for example, in a range of about 1 nm to about 200 nm, about 1 nm to about 150 nm, about 1 nm to about 100 nm, about 1 nm to about 50 nm, about 1 nm to about 30 nm, or about 1 nm to about 20 nm. A length of the primary carbon nanostructure may be, for example, in a range of about 10 nm to about 2 µm, about 10 nm to about 1.5 µm, about 10 nm to about 1 µm, about 10 nm to about 500 nm, about 10 nm to about 400 nm, about 10 nm to about 300 nm, about 10 nm to about 200 nm, or about 10 nm to about 100 nm. The diameter and length of the primary carbon nanostructure may be measured from images obtained by utilizing a scanning electron microscope (SEM) or a transmission electron microscope (TEM). In some embodiments, the diameter and/or length of the primary carbon nanostructure may be measured by a laser diffraction method.

In some embodiments, the secondary carbon nanostructure may be, for example, a structure (e.g., a secondary particle or structure) formed by the primary carbon nanostructures (e.g., primary particles or structures) that are wholly or partially aggregated to form bundles or ropes. The secondary carbon nanostructure may include, for example, a bundle-type or kind carbon nanostructure, a rope-type or kind carbon nanostructure, or a combination thereof. A diameter of the secondary carbon nanostructure (e.g., a cross-sectional diameter if in a form of nanotubes) may be, for example, in a range of about 2 nm to about 200 nm, about 3 nm to about 150 nm, about 5 nm to about 100 nm, about 5 nm to about 50 nm, about 5 nm to about 30 nm, or about 5 nm to about 20 nm. A length of the secondary carbon nanostructure may be, for example, in a range of about 20 nm to about 2 µm, about 30 nm to about 1.5 µm, about 50 nm to about 1 µm, about 50 nm to about 500 nm, about 50 nm to about 400 nm, about 50 nm to about 300 nm, about 50 nm to about 200 nm, or about 50 nm to about 100 nm or more. The diameter and length of the secondary carbon nanostructure may be measured from images obtained by an SEM or an optical microscope. In some embodiments, the diameter and/or length of the secondary carbon nanostructure may be measured by a laser diffraction method. The secondary carbon nanostructure may be, for example, dispersed in a solvent and/or the like to be converted into the primary carbon nanostructure, and then, may be utilized for the preparation of the composite.

In one or more embodiments, the composite may include, for example, about 10 parts by weight to about 80 parts by weight of the M₂S, about 1 part by weight to about 40 parts by weight of the alkali metal salt, and about 1 part by weight to about 20 parts by weight of the carbon-based material, based on 100 parts by weight of the composite. In some embodiments, the amount of the M₂S included in the composite may be, for example, in a range of about 10 parts by weight to about 80 parts by weight, about 20 parts by weight to about 70 parts by weight, about 30 parts by weight to about 60 parts by weight, or about 40 parts by weight to 60 parts by weight, based on 100 parts by weight of the composite. The amount of the alkali metal salt included in the composite may be, for example, in a range of about 10 parts by weight to about 40 parts by weight, about 15 parts by weight to about 40 parts by weight, about 20 parts by weight to about 40 parts by weight, or about 25 parts by weight to 35 parts by weight, based on 100 parts by weight of the composite. The amount of the carbon-based material included in the composite may be, for example, in a range of about 1 part by weight to about 20 parts by weight, about 5 parts by weight to about 20 parts by weight, or about 5 parts by weight to 15 parts by weight, based on 100 parts by weight of the composite. If (e.g., when) the composite includes the M₂S, the alkali metal salt, and the carbon-based material as described above, the composite cathode active material including the composite may provide excellent or suitable ion conductivity and/or electronic conductivity.

In one or more embodiments, the M₂S-containing composite may be a Li₂S-containing composite, and the Li₂S-containing composite may include a composite of Li₂S, a lithium salt, and a carbon-based material, the composite including about 10 parts by weight to about 80 parts by weight of the Li₂S, about 1 part by weight to about 40 parts by weight of the lithium salt, and about 1 part by weight to about 20 parts by weight of the carbon-based material, based on 100 parts by weight of the composite.

In one or more embodiments, the ion conductivity of the composite may be, for example, 1×10⁻⁵ S/cm or more, 2×10⁻⁵ S/cm or more, 4×10⁻⁵ S/cm or more, 6×10⁻⁵ S/cm or more, 8×10⁻⁵ S/cm or more, or 1×10⁻⁴ S/cm or more, at 25 °C. The ion conductivity may be measured by, for example, electrochemical impedance spectroscopy, a direct current (DC) polarization method, and/or the like. If (e.g., when) the composite has the ion conductivity within the ranges above, the internal resistance of the composite cathode active material including the composite may be reduced. The cycle characteristics of a secondary battery including the composite cathode active material may be then improved. The electronic conductivity of the composite may be, for example, 1×10⁻⁵ S/cm or more, 2×10⁻⁵ S/cm or more, 4×10⁻⁵ S/cm or more, 6×10⁻⁵ S/cm or more, 8×10⁻⁵ S/cm or more, or 1×10⁻⁴ S/cm or more, at 25 °C. The electronic conductivity may be measured by, for example, electrochemical impedance spectroscopy, a DC polarization method, and/or the like. If (e.g., when) the composite has the electronic conductivity within the ranges above, the internal resistance of the composite cathode active material including the composite may be reduced. The cycle characteristics of a secondary battery including the composite cathode active material may be then improved.

### Cathode layer

### Cathode layer: Cathode active material

The cathode according to one or more embodiments may include: a cathode current collector; and a cathode active material layer on one surface (or side) or both (e.g., two opposite) surfaces (or sides) of the cathode current collector. The cathode active material layer may include the aforementioned composite cathode active material and a solid electrolyte. If (e.g., when) the cathode includes the composite cathode active material and the solid electrolyte, the internal resistance of the cathode may be further reduced. In this regard, the cycle characteristics of a secondary battery including the cathode may be further improved.

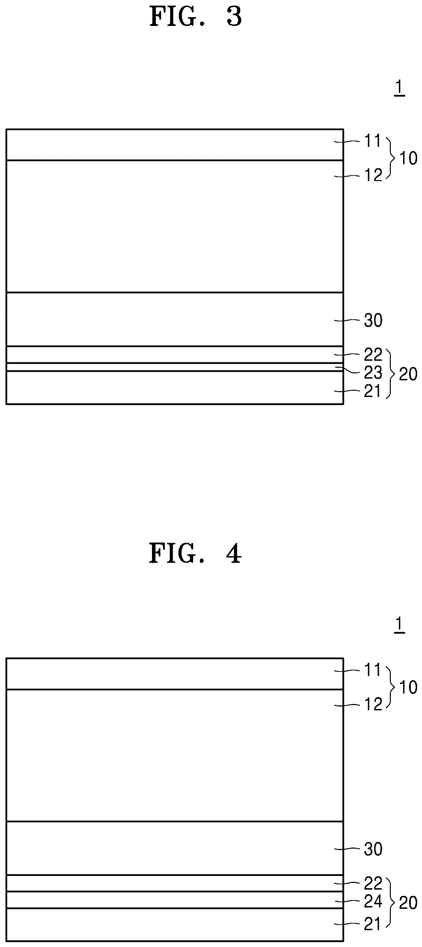

Referring to FIGs. 3 to 6, the cathode layer 10 may include: the cathode current collector 11; and the cathode active material layer 12 on one surface (or side) or both (e.g., two opposite) surfaces (or sides) of the cathode current collector 11. The cathode active material layer 12 may include the aforementioned composite cathode active material and a solid electrolyte.

The composite cathode active material may be included in the amount in a range of about 40 parts by weight to about 90 parts by weight, about 40 parts by weight to about 80 parts by weight, about 50 parts by weight to about 80 parts by weight, or about 50 parts by weight to about 70 parts by weight, based on 100 parts by weight of the cathode active material layer 12. If (e.g., when) the amount of the composite cathode active material excessively decreases, the energy density of the all solid secondary battery 1 may be reduced. If (e.g., when) the amount of the composite cathode active material excessively increases, the deterioration of the cathode may be accelerated due to the volume changes in the cathode during charging and discharging. As a result, the cycle characteristics of the secondary battery 1 may be degraded.

In one or more embodiments, the cathode active material layer 12 may additionally include one or more of other cathode active materials in addition to the aforementioned composite cathode active material.

The other cathode active material may include, for example, a Li₂S-containing composite. The Li₂S-containing composite may include, for example, a composite of Li₂S and a carbon-based material, a composite of Li₂S, a carbon-based material, and a solid electrolyte, a composite of Li₂S and a solid electrolyte, a composite of Li₂S and a lithium salt, a composite of Li₂S and a metal carbide, a composite of Li₂S, a carbon-based material, and a metal carbide, a composite of Li₂S and a metal nitride, a composite of Li₂S, a carbon-based material, and a metal nitride, or any combination thereof.

The composite of Li₂S and a carbon-based material may include a carbon-based material, in addition to Li₂S. The carbon-based material may be understood by referring to the carbon-based material of the aforementioned composite cathode active material. A method of preparing the composite of Li₂S and the carbon-based material may be a dry method, a wet method, or a combination thereof, but embodiments of the present disclosure are not limited thereto. Any method available in the art may be utilized. In one or more embodiments, a method of preparing the composite of Li₂S and the carbon-based material may be, for example, milling, heat treatment, deposition, and/or the like, but embodiments of the present disclosure are not limited thereto. Any method available in the art may be utilized.

The composite of Li₂S, a carbon-based material, and a solid electrolyte may include a carbon-based material and a solid electrolyte, in addition to Li₂S. The carbon-based material may be understood by referring to the carbon-based material of the aforementioned composite of Li₂S and the carbon-based material. The solid electrolyte may be, for example, any material utilized as an ionic conductive material in the art. In one or more embodiments, the solid electrolyte may be, for example, an inorganic solid electrolyte. The solid electrolyte may be, for example, a crystalline solid electrolyte, an amorphous solid electrolyte, or a combination thereof. The solid electrolyte may be, for example, a sulfide-based solid electrolyte, an oxide-based solid electrolyte, or any combination thereof. The sulfide-based solid electrolyte may include, for example, Li, S, and P, and may optionally further include a halogen element. The sulfide-based solid electrolyte may be selected from sulfide-based solid electrolytes utilized in an electrolyte layer. The sulfide-based solid electrolyte may have, for example, ion conductivity of 1×10⁻⁵ S/cm or more at room temperature. The oxide-based solid electrolyte may include, for example, Li, O, and a transition metal element, and may optionally further include other elements. The oxide-based solid electrolyte may be, for example, a solid electrolyte having ion conductivity of 1×10⁻⁵ S/cm or more at room temperature. The oxide-based solid electrolyte may be selected from oxide-based solid electrolytes utilized in an electrolyte layer.

The composite of Li₂S and a solid electrolyte may include a solid electrolyte, in addition to Li₂S. The solid electrolyte may be understood by referring to the solid electrolyte of the aforementioned composite of Li₂S, the carbon-based material, and the solid electrolyte.

The composite of Li₂S and a lithium salt may include Li₂S and a lithium salt. The lithium salt may be understood by referring to the lithium salt of the aforementioned composite cathode active material. In some embodiments, the lithium salt may be, for example, a lithium halide compound including one or more selected from among LiF, LiCl, LiBr, and Lil. In one or more embodiments, the composite of Li₂S and the lithium salt may be, for example, a composite of Li₂S and a lithium halide. If (e.g., when) the composite of Li₂S and the lithium salt includes the lithium halide compound, the further improved ion conductivity may be provided. The composite of Li₂S and the lithium salt may be distinguished from a simple mixture of Li₂S and the lithium salt. The simple mixture of Li₂S and the lithium salt may fail to maintain a dense interface between the Li₂S and the lithium salt, resulting in high interfacial resistance. As a result, the lifespan characteristics of a secondary battery may be degraded.

The composite of Li₂S and a metal carbide may include a metal carbide, in addition to Li₂S. The metal carbide may be, for example, a two-dimensional metal carbide. The two-dimensional metal carbide may be, for example, represented by Mₙ₊₁CₙTₓ (wherein M may be a transition metal, T may be an end group, and may be O, OH, and/or F, n may be 1, 2, or 3, and x may represent the number of end groups). In some embodiments, the two-dimensional metal carbide may be, for example, Ti₂CTₓ, (Ti_{0.5}, Nb_{0.5})₂CTₓ, Nb₂CTₓ, V₂CTₓ, Ti₃C₂Tₓ, (V_{0.5}, Cr_{0.5})₃C₂Tₓ, Ti₃CNTₓ, Ta₄C₃Tₓ, Nb₄C₃Tₓ, or one or more combinations thereof. The surfaces of the two-dimensional metal carbide may be terminated with O, OH, and/or F.

The composite of Li₂S, a carbon-based material, and a metal carbide may include a carbon-based material and a metal carbide, in addition to Li₂S. The carbon-based material may be understood by referring to the carbon-based material of the aforementioned composite of Li₂S and the carbon-based material. The metal carbide may be understood by referring to the metal carbide of the aforementioned composite of Li₂S and the metal carbide.

The composite of Li₂S and a metal carbide may include a metal carbide, in addition to Li₂S. The metal nitride may be, for example, a two-dimensional metal nitride. The two-dimensional metal nitride may be, for example, represented by Mₙ₊₁NₙTₓ (wherein M may be a transition metal, T may be an end group, and may be O, OH, and/or F, n may be 1, 2, or 3, and x may represent the number of end groups). The surfaces of the two-dimensional metal nitride may be terminated with O, OH, and/or F.

The composite of Li₂S, a carbon-based material, and a metal nitride may include a carbon-based material and a metal nitride, in addition to Li₂S. The carbon-based material may be understood by referring to the carbon-based material of the aforementioned composite of Li₂S and the carbon-based material. The metal carbide may be understood by referring to the metal carbide of the aforementioned composite of Li₂S and the metal carbide.

In one or more embodiments, the cathode active material layer 12 may further include, for example, a sulfide-based compound that is distinguished from the aforementioned cathode active material. The sulfide-based compound may be, for example, a compound including: a metal element other than Li; and a sulfur element. The sulfide-based compound may be, for example, a compound including: a metal element belonging to Groups 1 to 14 of the periodic table of the elements and having an atomic weight of 10 or more; and a sulfur element. In some embodiments, the sulfide-based compound may be, for example, FeS₂, VS₂, NaS, MnS, FeS, NiS, CuS, or one or more combinations thereof. If (e.g., when) the cathode active material layer 12 additionally includes the sulfide-based compound, the cycle characteristics of the all solid secondary battery 1 may be further improved. An amount of the sulfide-based compound included in the cathode active material layer 12 may be 10 wt% or less, 5 wt% or less, 3 wt% or less, or 1 wt% or less, based on a total weight of the cathode active material layer 12.

### Cathode layer: Solid electrolyte

In one or more embodiments, the cathode active material layer 12 may further include, for example, a solid electrolyte (e.g., in a form of particles). The solid electrolyte may be, for example, a sulfide-based solid electrolyte. The solid electrolyte included in the cathode layer 10 may be identical to or different from the solid electrolyte included in the electrolyte layer 30. Details on the solid electrolyte may be understood by referring to the electrolyte layer 30.

The solid electrolyte included in the cathode active material layer 12 may have a smaller average particle diameter D50 than the solid electrolyte included in the electrolyte layer 30. For example, in one or more embodiments, the average particle diameter D50 of the solid electrolyte included in the cathode active material layer 12 may be 90 % or less, 80 % or less, 70 % or less, 60 % or less, 50 % or less, 40 % or less, 30 % or less, or 20 % or less, with respect to the average particle diameter D50 of the solid electrolyte included in the electrolyte layer 30. The average particle diameter D50 may be, for example, a median particle diameter D50. The median particle diameter D50 may be a particle size corresponding to a 50 % cumulative volume calculated from particles having a small particle size to particles having a large particle size in a particle size distribution measured by, for example, a laser diffraction method.

The solid electrolyte may be included in an amount in a range of about 10 parts by weight to about 60 parts by weight, about 10 parts by weight to about 50 parts by weight, about 20 parts by weight to about 50 parts by weight, or about 30 parts by weight to about 50 parts by weight, based on 100 parts by weight of the cathode active material layer 12. If (e.g., when) the amount of the solid electrolyte excessively decreases, the cycle characteristics of the all solid secondary battery 1 may be degraded due to an increase in the internal resistance of the cathode layer 10. If (e.g., when) the amount of the solid electrolyte excessively increases, the energy density of the all solid secondary battery 1 may be reduced.

### Cathode layer: Conductive material

In one or more embodiments, the cathode active material layer 12 may further include a conductive material. The conductive material may be, for example, a carbon-based conductive material, a metal-based conductive material, or any combination thereof. The carbon-based conductive material may be, for example, graphite, carbon black, acetylene black, Ketjen black, carbon fibers, or one or more combinations thereof, but embodiments of the present disclosure are not limited thereto. Any material available as a carbon-based conductive material in the art may be utilized. The metal-based conductive material may be metal powder, metal fibers, or any combination thereof, but embodiments of the present disclosure are not limited thereto. Any material available as a metal-based conductive material in the art may be utilized. An amount of the conductive material included in the cathode active material layer 12 may be, for example, in a range of about 1 wt% to about 30 wt%, about 1 wt% to about 20 wt%, or about 1 wt% to about 10 wt%, based on a total weight of the cathode active material layer 12.

In some embodiments, the cathode active material layer 12 may include a carbon-based material, and the carbon-based material may be disposed only on/in the composite cathode active material. The cathode active material layer 12 may not additionally include a separate carbon-based material other than the composite cathode active material including the carbon-based material. If (e.g., when) the cathode active material layer 12 does not additionally include a separate carbon-based material, the energy density of the cathode layer 10 and the all solid secondary battery 1 may be improved, and a preparation process of the battery may be simplified.

### Cathode layer: Binder

In one or more embodiments, the cathode active material layer 12 may further include a binder. The binder may be, for example, a styrene butadiene rubber(SBR), polytetrafluoroethylene, polyvinylidene fluoride, polyethylene, and/or the like, but embodiments of the present disclosure are not limited thereto. Any material available as a binder in the art may be utilized. An amount of the binder included in the cathode active material layer 12 may be, for example, in a range of about 1 wt% to about 10 wt% based on a total weight of the cathode active material layer 12. In some embodiments, the binder may not be provided and utilized.

### Cathode layer: Other additives

In one or more embodiments, the cathode active material layer 12 may further include, for example, an additive, such as a filler, a coating agent, a dispersant, an ion conductive auxiliary agent, and/or the like, in addition to the cathode active material, the solid electrolyte, the binder, and the cathode active material described above.

As the filler, the coating agent, the dispersant, the ion conductive auxiliary agent, and/or the like that may be included in the cathode active material layer 12, any suitable material generally utilized for an electrode of the all solid secondary battery 1 may be utilized.

### Cathode layer: Cathode current collector

The cathode current collector 11 may be, for example, in the form of a plate or a foil, each including (e.g., consisting of or formed of) indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or any alloy thereof. In some embodiments, the cathode current collector 11 may not be provided. In one or more embodiments, a thickness of the cathode current collector 11 may be, for example, in a range of about 1 µm to about 100 µm, about 1 µm to about 50 µm, about 5 µm to about 25 µm, or about 10 µm to about 20 µm.

In one or more embodiments, the cathode current collector 11 may include, for example, a base film and a metal layer on a side (e.g., one surface (or side) or both (e.g., two opposite) surfaces (or sides)) of the base film. The base film may include, for example, a polymer. The polymer may be, for example, a thermoplastic polymer. The polymer may include, for example, polyethyleneterephthalate (PET), polyethylene (PE), polypropylene (PP), polybutyleneterephthalate (PBT), polyimide (PI), or any combination thereof. The base film may be, for example, an insulator. If (e.g., when) the base film includes an insulating thermoplastic polymer, the base film may be softened or liquified upon the occurrence of a short circuit, so that the operation of a battery may stop and a rapid increase in current may then be suppressed or reduced. The metal layer may include, for example, In, Cu, Mg, stainless steel, Ti, Fe, Co, Ni, Zn, Al, Ge, or any alloy thereof. The metal layer may act as an electrochemical fuse, and thus may be cut in the event of an overcurrent to perform a short circuit prevention function. A limit current and a maximum current may be adjusted by adjusting a thickness of the metal layer. The metal layer may be plated or deposited on the base film. As the thickness of the metal layer decreases, the limiting current and/or maximum current of the cathode current collector 11 may decrease, and thus the stability of a lithium battery may be improved. In one or more embodiments, a lead tab may be added onto the metal layer for connection with the outside. The lead tab may be welded to the metal layer or a metal layer/base film laminate by ultrasonic welding, laser welding, spot welding, and/or the like. The metal layer may be electrically connected to the lead tab while the base film and/or the metal layer melts during welding. In some embodiments, a metal chip may be further added between the metal layer and the lead tab for stronger welding therebetween. The metal chip may be a thin piece of the same material as the metal of the metal layer. The metal chip may be, for example, a metal foil, a metal mesh, and/or the like. In some embodiments, the metal chip may be, for example, an aluminum foil, a copper foil, an SUS (stainless steel) foil, and/or the like. If (e.g., when) the metal chip is disposed on the metal layer and then welded with the lead tab, the lead tab may be welded to a metal chip/metal layer laminate or a metal chip/metal layer/base film laminate. During welding, the base film, the metal layer, and/or the metal chip may melt, and then the metal layer or the metal layer/metal chip laminate may be electrically connected to the lead tab. In this regard, the metal chip and/or the lead tab may be added onto a portion of the metal layer. In one or more embodiments, a thickness of the base film may be, for example, in a range of about 1 µm to about 50 µm, about 1.5 µm to about 50 µm, about 1.5 µm to about 40 µm, or about 1 µm to about 30 µm. If (e.g., when) the thickness of the base film is within the ranges above, the weight of an electrode assembly may be reduced more effectively. In one or more embodiments, a melting point of the base film may be, for example, in a range of about 100 °C to about 300 °C, about 100 °C to about 250 °C, or about 100 °C to about 200 °C. If (e.g., when) the melting point of the base film is within the ranges above, the base film may melt during a process of welding the lead tab to be easily connected to the lead tab. In some embodiments, to improve the adhesion between the base film and the metal layer, a surface treatment such as a corona treatment may be performed on the base film. In one or more embodiments, a thickness of the metal layer may be, for example, in a range of about 0.01 µm to about 3 µm, about 0.1 µm to about 3 µm, about 0.1 µm to about 2 µm, or about 0.1 µm to about 1 µm. If (e.g., when) the thickness of the metal layer is within the ranges above, the stability of an electrode assembly may be secured while maintaining the conductive. In one or more embodiments, a thickness of the metal chip may be, for example, in a range of about 2 µm to about 10 µm, about 2 µm to about 7 µm, or about 4 µm to about 6 µm. If (e.g., when) the thickness of the metal chip is within the ranges above, the connection between the metal layer and the lead tab may be performed more easily. If (e.g., when) the cathode current collector 11 has such a structure, the weight of the cathode layer 10 may be reduced, and consequently, the energy density of the cathode layer 10 and an all solid secondary battery may be improved.

### Cathode layer: Inactive member

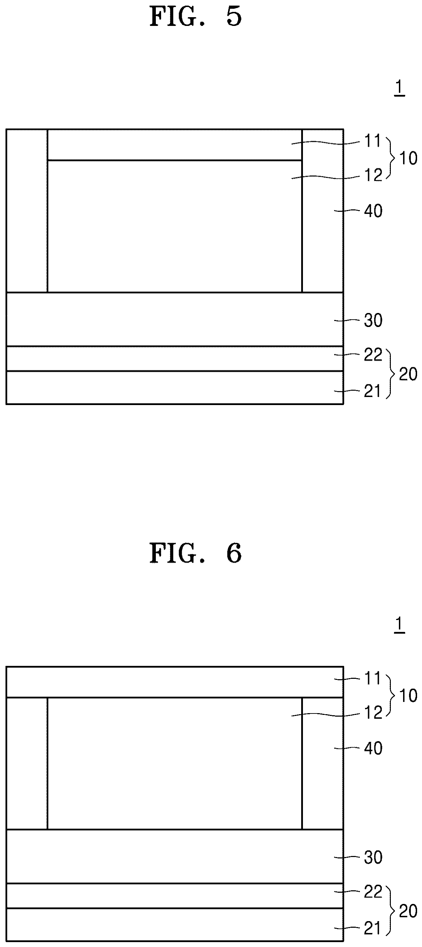

Referring to FIG. 5 and FIG. 6, the cathode layer 10 may include: the cathode current collector 11; and the cathode active material layer 12 on one surface (or side) or both (e.g., two opposite) surfaces (or sides) of the cathode current collector 11. An inactive member 40 may be disposed on (e.g., abutting) one side of the cathode layer 10. Referring to FIG. 5, the inactive member 40 may be disposed on (e.g., abutting) one side of the cathode active material layer 12 and one side of the cathode current collector 11. Referring to FIG. 6, the inactive member 40 may be disposed on (e.g., abutting) one side of the cathode active material layer 12 and between the electrolyte layer 30 and the cathode current collector 11 facing the electrolyte layer 30. The inactive member 40 may not be disposed on (e.g., may not abut) one side of the cathode current collector 11. The electrolyte layer 30 may be, for example, a solid electrolyte layer.

Due to the inactive member 40, the occurrence of cracks may be prevented or reduced in the electrolyte layer 30 during the preparation of the all solid secondary battery 1 and/or charging and discharging thereof, and consequently, the cycle characteristics of the all solid secondary battery 1 may be improved. In an all solid secondary battery 1 not including the inactive member 40, cracks may occur in the electrolyte layer 30 during the preparation of the all solid secondary battery 1 and/or charging and discharging thereof due to a non-substantially uniform pressure applied to the electrolyte layer 30 that is in contact with the cathode layer 10. Afterwards, if (e.g., when) the lithium metal grows, the possibility of a short circuit may increase.

In the all solid secondary battery 1, a thickness of the inactive member 40 may be greater than or the same as a thickness of the cathode active material layer 12. In some embodiments, in the all solid secondary battery 1, the thickness of the inactive member 40 may be substantially the same as the thickness of the cathode layer 10. If (e.g., when) the thickness of the inactive member 40 is the substantially same as the thickness of the cathode layer 10, a substantially uniform pressure may be applied between the cathode layer 10 and the electrolyte layer 30, so that the cathode layer 10 and the electrolyte layer 30 may be sufficiently close together (e.g., in a sufficient contact) to thereby reduce the interfacial resistance between the cathode layer 10 and the electrolyte layer 30. In a process of preparing the all solid secondary battery 1 under pressure, the electrolyte layer 30 may be sufficiently sintered, so that the internal resistance of the electrolyte layer 30 and the all solid secondary battery 1 including the same may be reduced.

The inactive member 40 may be in contact with the electrolyte layer 30 by around (e.g., surrounding) side surfaces of the cathode layer 10. If (e.g., when) the inactive member 40 is in contact with the solid electrolyte layer 30 by around (e.g., surrounding) side surfaces of the cathode layer 10, cracks occurring in the solid electrolyte layer 30, which is not in contact with the cathode layer 10, due to a pressure difference in the electrolyte layer 30 may be suppressed or reduced effectively. The inactive member 40 around (e.g., surrounding) side surfaces of the cathode layer 10 may be separated from the anode layer 20, for example, from a first anode active material layer 22 in more specific. The inactive member 40 may be in contact with the electrolyte layer 30 by being around (e.g., surrounding) side surfaces of the cathode layer 10, and may be separated from the anode layer 20. In this regard, the possibility of a short circuit caused by physical contact between the cathode layer 10 and the first anode active material layer 22 or the possibility of a short circuit caused by overheating of lithium may be suppressed or reduced. For example, if (e.g., when) the inactive member 40 is disposed on one side of the cathode active material layer 12 and concurrently (e.g., simultaneously) on one side of the cathode current collector 11, the possibility of a short circuit caused by contact between the cathode current collector 11 and the anode layer 20 may be suppressed or reduced more effectively.

Referring to FIG. 5 and FIG. 6, the inactive member 40 may extend from one side of the cathode layer 10 to an end portion of the electrolyte layer 30. If (e.g., when) the inactive member 40 extends to the end portion of the electrolyte layer 30, cracks occurring in the end portion of the electrolyte layer 30 may be suppressed or reduced. The end portion of the solid electrolyte layer 30 may refer to an outermost portion that is in contact with side surfaces of the electrolyte layer 30. The inactive member 40 may extend to the outermost portion that is in contact with side surfaces of the electrolyte layer 30. In one or more embodiments, the inactive member 40 may be separated from the anode layer 20, for example, from the first anode active material layer 22 in more specific. The inactive member 40 may extent to the end portion of the electrolyte layer 30, but may not be in contact with the anode layer 20. The inactive member 40 may, for example, fill a space between one side of the cathode layer 10 and the end portion of the electrolyte layer 30.

Referring to FIG. 5 and FIG. 6, in one or more embodiments, a width of the inactive member 40 extending from one side of the cathode layer 10 to the end portion of the electrolyte layer 30 may be, for example, in a range of about 1 % to about 30 %, about 1 % to about 25 %, about 1 % to about 20 %, about 1 % to about 15 %, about 1 % to about 10 %, or about 1 % to about 5 %, with respect to the width between one side of the cathode layer 10 and the other sides facing the one side. If (e.g., when) the width of the inactive member 40 is excessively large, the energy density of the all solid secondary battery 1 may be reduced. If (e.g., when) the width of the inactive member 40 is excessively small, the effect of disposing the inactive member 40 may be negligible.

In one or more embodiments, an area (e.g., a surface area of a surface facing the electrolyte layer 30) of the cathode layer 10 may be smaller than an area (e.g., a surface area of a surface facing the cathode layer 10) of the electrolyte layer 30 that is in contact with the cathode layer 10. The inactive member 40 disposed to surround side surfaces of the cathode layer 10 may compensate for a difference in the area between the cathode layer 10 and the electrolyte layer 30. If (e.g., when) the area of the inactive member 40 compensates for the difference between the area of the cathode layer 10 and the area of the electrolyte layer 30, cracks occurring in the electrolyte layer 30 due to a pressure difference during a pressing process may be suppressed or reduced effectively. For example, in one or more embodiments, the sum of the area of the cathode layer 10 and the area of the inactive member 40 may be substantially the same as the area of the electrolyte layer 30. The electrolyte layer 30 may be, for example, a solid electrolyte layer.

In one or more embodiments, the area of the cathode layer 10 may be, for example, less than 100 %, 99 % or less, 98 % or less, 97 % or less, 96 % or less, or 95 % or less, with respect to the area of the electrolyte layer 30. In some embodiments, the area of the cathode layer 10 may be, for example, in a range of about 50 % to less than about 100 %, about 50 % to about 99 %, about 55 % to about 98 %, about 60 % to about 97 %, about 70 % to about 96 %, about 80 % to about 95 %, or about 85 % to about 95 %, with respect to the area of the electrolyte layer 30.

If (e.g., when) the area of the cathode layer 10 is substantially the same as or greater than the area of the electrolyte layer 30, the possibility of a short circuit caused by physical contact between the cathode layer 10 and the first anode active material layer 22 or the possibility of a short circuit caused by overheating of lithium may increase. In some embodiments, the area of the cathode layer 10 may be, for example, substantially the same as the area of the cathode active material layer 12. In some embodiments, the area of the cathode layer 10 may be, for example, substantially the same as the area of the cathode current collector 11.

In one or more embodiments, the area of the inactive member 40 may be, for example, 50 % or less, 40 % or less, 30 % or less, 20 % or less, or 10 % or less, with respect to the area of the cathode layer 10. In some embodiments, the area of the inactive member 40 may be, for example, in a range of about 1 % to about 50 %, about 5 % to about 40 %, about 5 % to about 30 %, about 5 % to about 20 %, or about 5 % to about 15 %, with respect to the area of the cathode layer 10.

In one or more embodiments, an area S1 of the cathode layer 10 may be smaller than an area S4 (e.g., a surface area of a surface facing the cathode layer 10) of an anode current collector 21 included in the anode layer 20. In some embodiments, the area S1 of the cathode layer 10 may be, for example, less than 100 %, 99 % or less, 98 % or less, 97 % or less, 96 % or less, or 95 % or less, with respect to the area S4 of the anode current collector 21. In some embodiments, the area S1 of the cathode layer 10 may be, for example, in a range of about 50 % to less than about 100 %, about 50 % to about 99 %, about 55 % to about 98 %, about 60 % to about 97 %, about 70 % to about 96 %, about 80 % to about 95 %, or about 85 % to about 95 %, with respect to the area S4 of the anode current collector 21. In some embodiments, the area S4 of the anode current collector 21 may be, for example, substantially the same as an area (a surface area of a surface facing the cathode layer 10) of the anode layer 20. In some embodiments, the area S4 of the anode current collector 21 may be, for example, substantially the same as an area (a surface area of a surface facing the cathode layer 10) of the first anode active material layer 22.

In the present disclosure, the expression "same" area, length, width, thickness, and/or shape may include all cases having "substantially same" area, length, width, thickness, and/or shape, except for cases where differences intentionally exist in area, length, width, thickness, and/or shape. The "same" area, length, width, and/or thickness may include, for example, a range of unintended differences of less than 3 %, less than 2 %, less than 1 %, less than 0.5 %, or less than 0.1 %, in the area, length, width, and/or thickness between subjects to be compared.

In one or more embodiments, a thickness of the inactive member 40 may be, for example, greater than a thickness of the first anode active material layer 22. In some embodiments, the thickness of the first anode active material layer 22 may be, for example, 50 % or less, 40 % or less, 30 % or less, about 20 % or less, or 10 % or less, with respect to the thickness of the inactive member 40. In some embodiments, the thickness of the first anode active material layer 22 may be, for example, in a range of about 1 % to about 50 %, about 1 % to about 40 %, about 1 % to about 30 %, about 1 % to about 20 %, or about 1 % to about 10 %, with respect to the thickness of the inactive member 40.

In one or more embodiments, the inactive member 40 may be a gasket. By utilizing the gasket as the inactive member 40, cracks occurring in the electrolyte layer 30 due to a pressure difference during a pressing process may be suppressed or reduced more effectively.

In some embodiments, the inactive member 40 may have, for example, a single-layer structure. In some embodiments, the inactive member 40 may have a multi-layer structure. In the inactive member 40 having a multi-layer structure, each layer may have a different composition. The inactive member 40 having a multi-layer structure may have, for example, a two-layer structure, a three-layer structure, a four-layer structure, or a five-layer structure. In some embodiments, the inactive member 40 having a multi-layer structure may include, for example, one or more adhesive layers and one or more support layers. The adhesive layer may effectively prevent or reduce separation of the cathode layer 10 from the electrolyte layer 30 due to the volume change of the cathode layer 10 during a charging and discharging process of the all solid secondary battery 1, and may provide cohesion between the support layer and other layers, thereby improving a film/layer strength of the inactive member 40. The support layer may provide a supporting force to the inactive member 40 to prevent or reduce non-uniformity of pressure applied to the electrolyte layer 30 during a pressing process or a charging and discharging process and to prevent or reduce deformation of the all solid secondary battery 1.

In one or more embodiments, the inactive member 40 may be, for example, a flame-retardant inactive member. If (e.g., when) the flame-retardant inactive member provides flame retardancy, the possibility of thermal runaway and ignition of the all solid secondary battery 1 may be prevented or reduced. As a result, the safety of the all solid secondary battery 1 may be further improved. If (e.g., when) the flame-retardant inactive member absorbs moisture remaining in the all solid secondary battery 1, the deterioration of the all solid secondary battery 1 may be prevented or reduced, so as to improve the lifespan characteristics of the all solid secondary battery 1.

The flame-retardant inactive member may include, for example, a matrix and a filler. The matrix may include, for example, a substrate and a stiffening material. In some embodiments, the matrix may include, for example, a fibrous substrate and a fibrous stiffening material. If (e.g., when) the matrix includes a substrate, the matrix may obtain elasticity. In this regard, the matrix may effectively accommodate the volume change of the all solid secondary battery 1 during charging and discharging, and thus may be disposed in one or more suitable positions. The substrate included in the matrix may include, for example, a first fibrous material. If (e.g., when) the substrate includes the first fibrous material, the volume change of the cathode layer 10 during a charging and discharging process of the all solid secondary battery 1 may be effectively accommodated, and the deformation of the inactive member 40 caused by the volume change of the cathode layer 10 may be suppressed or reduced effectively. In one or more embodiments, an aspect ratio of the first fibrous material may be, for example, 5 or more, 20 or more, or 50 or more. In some embodiments, the aspect ratio of the first fibrous material may be, for example, about 5 to about 1,000, about 20 to about 1,000, or about 50 to about 1,000. The first fibrous material may be, for example, an insulating material. If (e.g., when) the first fibrous material is an insulating material, a short circuit between the cathode layer 10 and the anode layer 20 caused by lithium dendrites and/or the like formed during a charging and discharging process of the all solid secondary battery 1 may suppressed or reduced effectively. The first fibrous material may include, for example, at least one selected from among a pulp fiber, an insulating polymer fiber, and an ion-conductive polymer fiber. If (e.g., when) the matrix includes the stiffening material, the strength of the matrix may be improved. Therefore, the matrix may prevent or reduce an excessive volume change during charging and discharging of the all solid secondary battery 1, and may prevent or reduce deformation of the all solid secondary battery 1. In one or more embodiments, the stiffening material included in the matrix may include, for example, a second fibrous material. If (e.g., when) the stiffening material includes the second fibrous material, the strength of the matrix may be increased more uniformly. In one or more embodiments, an aspect ratio of the second fibrous material may be, for example, 3 or more, 5 or more, or 10 or more. In some embodiments, the aspect ratio of the second fibrous material may be, for example, about 3 to about 100, about 5 to about 100, or about 10 to about 100. In one or more embodiments, the second fibrous material may be, for example, a flame-retardant material. If (e.g., when) the second fibrous material is the flame-retardant material, ignition caused during a charging and discharging process of the all solid secondary battery 1 or caused by thermal runaway upon an external impact may be suppressed or reduced effectively. The second fibrous material may be, for example, one or more selected from among glass fibers, metal oxide fibers, ceramic fibers, and/or the like.

In one or more embodiments, the flame-retardant inactive member may include, for example, a filler in addition to the matrix. The filler may be disposed inside the matrix, on a surface of the matrix, or both (e.g., simultaneously) inside and on the surface of the matrix. The filler may be, for example, an inorganic material. In some embodiments, the filler included in the flame-retardant inactive member may be, for example, a moisture getter. The filler may, for example, absorb moisture at a temperature below 100 °C to remove moisture remaining in the all solid secondary battery 1, thereby preventing or reducing the deterioration of the all solid secondary battery 1. If (e.g., when) the temperature of the all solid secondary battery 1 exceeds 150 °C during a charging and discharging process of the all solid secondary battery 1 or due to thermal runaway caused by an external impact, the filler may release the absorbed moisture, thereby effectively suppressing ignition of the all solid secondary battery 1. In some embodiments, the filler may be, for example, a flame retardant. The filler may be, for example, a metal hydroxide having moisture absorbency. The metal hydroxide included in the filler may be, for example, Mg(OH)₂, Fe(OH)₃, Sb(OH)₃, Sn(OH)₄, Tl(OH)₃, Zr(OH)₄, Al(OH)₃, or one or more combinations thereof. An amount of the filler included in the flame-retardant inactive member may be, for example, in a range of about 10 parts by weight to about 80 parts by weight, about 20 parts by weight to about 80 parts by weight, about 30 parts by weight to about 80 parts by weight, about 40 parts by weight to about 80 parts by weight, about 50 parts by weight to about 80 parts by weight, about 60 parts by weight to about 80 parts by weight, or about 65 parts by weight to about 80 parts by weight, based on 100 parts by weight of the flame-retardant inactive member 40.

In one or more embodiments, the flame-retardant inactive member 40 may further include, for example, a binder. The binder may include, for example, a curable polymer or a non-curable polymer. The curable polymer may be a polymer cured by heat and/or pressure. The curable polymer may be, for example, a solid at room temperature. In some embodiments, the flame-retardant inactive member 40 may include, for example, a thermo-pressure curable film and/or a cured product thereof. The thermo-pressure curable polymer may be, for example, TSA-66 manufactured by Toray Company.

In one or more embodiments, the flame-retardant inactive member 40 may additionally include other materials in addition to the aforementioned substrate, stiffening material, filler, and binder. The flame-retardant inactive member 40 may further include, for example, at least one selected from among paper, an insulating polymer, an ion-conductive polymer, an insulating inorganic material, an oxide-based solid electrolyte, and a sulfide-based solid electrolyte. The insulating polymer may be, for example, an olefin-based polymer such as polypropylene (PP) and polyethylene (PE).

A density of the substrate or the stiffening material included in the flame-retardant inactive member 40 may be, for example, in a range of about 10 % to about 300 %, about 10 % to about 150 %, about 10 % to about 140 %, about 10 % to about 130 %, or about 10 % to about 120 %, with respect to a density of a cathode active material included in the cathode active material layer 12.

The inactive member 40 may be a member not including an electrochemically active material such as an electrode active material. The electrode active material may be a material that allows intercalation/deintercalation of lithium. The inactive member 40 may be a membrane including (e.g., consisting of) any material commonly utilized in the art, other than the electrode active material.

### Solid secondary battery

An all solid secondary battery according to one or more embodiments may include: the aforementioned cathode layer; an anode layer; a solid electrolyte layer between the cathode layer and the anode layer. The anode layer may include: an anode current collector; and a first anode active material layer on one surface (or side) of the anode current collector.

Referring to FIGs. 1 to 6, the all solid secondary battery 1 includes: the cathode layer 10; the anode layer 20; and the solid electrolyte layer 30 between the cathode layer 10 and the anode layer 20. The anode layer 20 may include: an anode current collector 21; and a first anode active material layer 22 on one surface (or side) or both (e.g., two opposite) surfaces of the anode current collector 21.

### Cathode Layer

A cathode layer may be understood by referring to the aforementioned cathode layer.

### Anode layer

### Anode layer: Anode active material

Referring to FIGs. 1 to 6, in one or more embodiments, the anode layer 20 may include a first anode active material layer 22. The first anode active material layer 22 may include, for example, an anode active material and a binder.

The anode active material included in the first anode active material layer 22 may be, for example, a material for anodes capable of forming an alloy or a compound with lithium.

In one or more embodiments, the anode active material included in the first anode active material layer 22 may be, for example, in the form of particles. An average particle diameter of the anode active material in the form of particles may be, for example, 4 µm or less, 3 µm or less, 3 µm or less, or 3 µm or less, 500 nm or less, 300 nm or less, or 100 nm or less. In some embodiments, the average particle diameter of the anode active material in the form of particles may be, for example, in a range of about 10 nm to about 4 µm, about 10 nm to about 3 µm, about 10 nm to about 2 µm, about 10 nm to about 1 µm, about 10 nm to about 500 nm, about 10 nm to about 300 nm, or about 10 nm to about 100 nm. If (e.g., when) the average particle diameter of the anode active material is within the ranges above, lithium may be more easily subjected to reversible absorbing and/or desorbing during charging and discharging. The average particle diameter of the anode active material may be, for example, a median diameter D50 measured by utilizing a laser particle size distribution analyzer.

The anode active material included in the first anode active material layer 22 may include, for example, one or more selected from among a carbon-based anode active material and a metallic or metalloid anode active material.

In one or more embodiments, the carbon-based anode active material may include, for example, amorphous carbon, crystalline carbon, porous carbon, or any combination thereof.

In some embodiments, the carbon-based anode active material may be, for example, amorphous carbon. The amorphous carbon may include, for example carbon black (CB), acetylene black (AB), furnace black (FB), Ketjen black (KB), graphene, and/or the like, but embodiments of the present disclosure are not limited thereto. Any material categorized as amorphous carbon in the art may be utilized. The amorphous carbon may be carbon that has no or very low crystallinity, and in this regard, may be distinguished from crystalline carbon or graphite-based carbon.

In some embodiments, the carbon-based anode active material may be, for example, porous carbon. A pore volume of the porous carbon may be, for example, in a range of about 0.1 cc/g to about 10.0 cc/g, about 0.5 cc/g to about 5 cc/g, or about 0.1 cc/g to about 1 cc/g. An average diameter of pores included in the porous carbon may be, for example, in a range of about 1 nm to about 50 nm, about 1 nm to about 30 nm, or about 1 nm to about 10 nm. The Brunauer-Emmett-Teller (BET) specific surface area of the porous carbon may be, for example, in a range of about 100 m²/g to about 3,000 m²/g.

The metallic or metalloid anode active material may include at least one selected from among gold (Au), platinum (Pt), palladium (Pd), silicon (Si), silver (Ag), aluminum (Al), bismuth (Bi), tin (Sn), and zinc (Zn), but embodiments of the present disclosure are not limited thereto. Any material available as a metallic anode active material or metalloid anode active material capable of forming an alloy or a compound with lithium in the art may be utilized. For example, because nickel (Ni) does not form an alloy with lithium, Ni may not be a metallic anode active material.

The first anode active material layer 22 may include one type or kind of an anode active material from among the aforementioned anode active materials, or a mixture of a plurality of different anode active materials. For example, in one or more embodiments, the first anode active material layer 22 may include only amorphous carbon, or one or more selected from among Au, Pt, Pd, Si, Ag, Al, Bi, Sn, and Zn. In some embodiments, the first anode active material layer 22 may include a mixture of amorphous carbon with one or more selected from among Au, Pt, Pd, Si, Ag, Al, Bi, Sn, and Zn. A mixing ratio of the amorphous carbon to Au and/or the like in the mixture may be, for example, in a range of about 99:1 to about 1:99, about 10:1 to about 1:2, about 5:1 to about 1:1, or about 4:1 to about 2:1, but embodiments of the present disclosure are not limited thereto. The mixing ratio may be determined depending on the characteristics of the required solid secondary battery 1. If (e.g., when) the anode active material has such a composition, the cycle characteristics of the all solid secondary battery 1 may be further improved.

In one or more embodiments, the anode active material included in the first anode active material layer 22 may include, for example, a mixture of first particles including (e.g., consisting of) amorphous carbon and second particles including (e.g., consisting of) a metal or a metalloid. The metal or the metalloid may include, for example, Au, Pt, Pd, Si, Ag, Al, Bi, Sn, Zn, and/or the like. The metalloid may be, for example, a semiconductor. An amount of the second particles may be in a range of about 1 wt% to about 99 wt%, about 1 wt% to about 60 wt%, about 8 wt% to about 60 wt%, about 10 wt% to about 50 wt%, about 15 wt% to about 40 wt%, or about 20 wt% to about 30 wt%, based on the total weight of the mixture. If (e.g., when) the amount of the second particles is within the ranges above, the cycle characteristics of the all solid secondary battery 1 may be further improved.

In some embodiments, the first anode active material layer 22 may include a composite anode active material. The composite anode active material may include, for example, a carbon-based support and a metal-based anode active material supported on the carbon-based support. If (e.g., when) the composite anode active material has such a structure, the localization or agglomeration of the metal-based anode active material may be prevented or reduced in the first anode active material layer 22, and the substantially uniform distribution may be obtained. As a result, the cycle characteristics of the all solid secondary battery 1 including the first anode active material layer 22 may further be improved.

The metal-based anode active material supported on the carbon-based support may include, for example, a metal, a metal oxide, a composite of a metal and a metal oxide, or any combination thereof. The metal may include, for example, Au, Pt, Pd, Si, Ag, Al, Bi, Sn, tellurium (Te), Zn, and/or the like. The metal oxide may include, for example, an Au oxide, a Pt oxide, a Pd oxide, an Si oxide, an Ag oxide, an Al oxide, a Bi oxide, an Sn oxide, a Te oxide, a Zn oxide, and/or the like. In some embodiments, the metal oxide may include, for example, AuₓO_{y} (where 0<x≤2 and 0<y≤3), PtₓO_{y} (where 0<x≤1 and 0<y≤2), PdₓO_{y} (where 0<x≤1 and 0<y≤1), SiₓO_{y} (where 0<x≤1 and 0<y≤2), AgₓO_{y} (where 0<x≤2 and 0<y≤1), AlₓO_{y} (where 0<x≤2 and 0<y≤3), BiₓO_{y} (where 0<x≤2 and 0<y≤3), SnₓO_{y} (where 0<x≤1 and 0<y≤2), TeₓO_{y} (where 0<x≤1 and 0<y≤3), ZnₓO_{y} (where 0<x≤1 and 0<y≤1), or any combination thereof. The composite of a metal and a metal oxide may include, for example, a composite of Au and AuₓO_{y} (where 0<x≤2 and 0<y≤3), a composite of Pt and PtₓO_{y} (where 0<x≤1 and 0<y≤2), a composite of Pd and PdₓO_{y} (where 0<x≤1 and 0<y≤1) a composite of Si and SiₓO_{y} (where 0<x≤1 and 0<y≤2), a composite of Ag and AgₓO_{y} (where 0<x≤2 and 0<y≤1), a composite of Al and AlₓO_{y} (where 0<x≤2 and 0<y≤3), a composite of Bi and BiₓO_{y} (where 0<x≤2 and 0<y≤3), a composite of Sn and SnₓO_{y} (where 0<x≤1 and 0<y≤2), a composite of Te and TeₓO_{y} (where 0<x≤1 0<y≤3), a composite of Zn and ZnₓO_{y} (where 0<x≤1 and 0<y≤1), or any combination thereof.

The carbon-based support may be, for example, amorphous carbon. The amorphous carbon may be, for example, carbon black(CB), acetylene black (AB), furnace black (FB), Ketjen black (KB), graphene, activated carbon, carbon nanofiber (CNF), carbon nanotube (CNT), etc., but embodiments of the present disclosure are not limited thereto. Any material classified as amorphous carbon in the art may be utilized. The amorphous carbon is carbon that has no or very low crystallinity, and in this regard, may be distinguished from crystalline carbon or graphite-based carbon. The carbon-based material may be, for example, a carbon-based anode active material.

The composite anode active material may be, for example, in the form of particles. A particle diameter of the composite active material in a form of particles may be, for example, in a range of about 10 nm to about 4 µm, about 10 nm to about 1 µm, about 10 nm to about 500 nm, about 10 nm to about 200 nm, or about 10 nm to about 100 nm. If (e.g., when) the particle diameter of the composite anode active material is within the ranges above, lithium may be more easily subjected to reversible absorbing and/or desorbing during charging and discharging. The metal-based anode active material supported on the support may be, for example, in the form of particles. A particle diameter of the metal-based anode active material in the form of particles may be, for example, in a range of about 1 nm to about 200 nm, about 1 nm to about 150 nm, about 5 nm to about 100 nm, or about 10 nm to about 50 nm. The carbon-based support may be, for example, in the form of particles. A particle diameter of the carbon-based support in the form of particles may be, for example, in a range of about 10 nm to about 2 µm, about 10 nm to about 1 µm, about 10 nm to about 500 nm, about 10 nm to about 200 nm, or about 10 nm to about 100 nm. If (e.g., when) the particle diameter of the carbon-based support is within the ranges above, the carbon-based support may be more uniformly disposed in the first anode active material layer 22. In some embodiments, the carbon-based support may be, for example, nanoparticles having a particle diameter of 500 nm or less. The particle diameter of the composite anode active material, the particle diameter of the metal-based anode active material, and the particle diameter of the carbon-based support may each refer to, for example, an average particle diameter. The average particle diameter may be, for example, a median diameter D50 measured by utilizing a laser particle size distribution analyzer. In some embodiments, the average particle diameter may be, for example, determined automatically by utilizing software or manually based on manual computation, from images obtained by an SEM image.

### Anode layer: Binder

The binder included in the first anode active material layer 22 may include, for example, a styrene butadiene rubber (SBR), polytetrafluoroethylene (PTFE), polyvinylidene fluoride (PVDF), polyethylene, a vinylidene fluoride/hexafluoropropylene copolymer, polyacrylonitrile, polymethyl methacrylate, and/or the like, but embodiments of the present disclosure are not limited thereto. Any material available as a binder in the art may be utilized. The binder may be utilized alone or in a combination of a plurality of binders that are different from each other.

If (e.g., when) the first anode active material layer 22 includes the binder, the first anode active material layer 22 may be stabilized on the anode current collector 21. Despite a change in the volume and/or relative position of the first anode active material layer 22, cracks in the first anode active material layer 22 may be suppressed or reduced. For example, if (e.g., when) the first anode active material layer 22 does not include the binder, the first anode active material layer 22 may be easily separated from the anode current collector 21. At a portion where the anode current collector 21 is exposed by separation of the first anode active material layer 22 from the anode current collector 22, the possibility of a short circuit may increase as the anode current collector 21 is in contact with the electrolyte layer 30. In one or more embodiments, the first anode active material layer 22 may be prepared by, for example, coating the anode current collector 21 with a slurry in which a material constituting the first anode active material layer 22 is dispersed, and drying the coated anode current collector 21. The inclusion of the binder in the first anode active material layer 22 may enable to stably disperse the anode active material in the slurry. For example, if (e.g., when) the anode current collector 21 is coated with the slurry by a screen printing method, clogging of a screen (for example, clogging by agglomerates of the anode electrode active material) may be suppressed or reduced.

### Anode layer: Other additives

In one or more embodiments, the first anode active material layer 22 may further include one or more additives utilized in the all solid secondary battery 1, such as a filler, a coating agent, a dispersant, an ionic conductive auxiliary agent, and/or the like.

### Anode layer: Solid electrolyte

In one or more embodiments, the first anode active material layer 22 may further include a solid electrolyte. The solid electrolyte may be, for example, selected from the solid electrolytes included in the solid electrolyte layer 30. The solid electrolyte included in the first anode active material layer 22 may serve as a reaction site where formation of lithium metal is initiated in the first anode active material layer 22, as a space for storing the formed lithium metal, or as a pathway for transferring lithium ions. In some embodiments, the solid electrolyte may not be provided and utilized.

In the first anode active material layer 22, an amount of the solid electrolyte may be high in a region adjacent to the solid electrolyte layer 30, and may be low in a region adjacent to the anode current collector 21. In some embodiments, in the first anode active material layer 22, the solid electrolyte may have, for example, a concentration gradient such that the concentration may decrease from a region adjacent to the solid electrolyte layer 30 to a region adjacent to the anode current collector 21.

### Anode layer: First anode active material layer

In one or more embodiments, A ratio B/A of an initial charging capacity B of the first anode active material layer 22 to an initial charging capacity A of the cathode active material layer may be in a range of about 0.005 to about 0.45. The initial charging capacity of the cathode active material layer 12 may be determined at a maximum charging voltage relative Li/Li⁺ charged from a 1^{st} open circuit voltage. The initial charging capacity of the first anode active material layer 22 may be determined at 0.01 V relative to Li/Li⁺ charged from a 2^{nd} open circuit voltage.

The maximum charging voltage may be determined by a type or kind of the cathode active material. The maximum charging voltage may be, for example, 1.5 V, 2.0 V, 2.5 V, 3.0 V, 3.5 V, 4.0 V, 4.2 V, or 4.3 V. For example, in some embodiments, the maximum charging voltage of Li₂S or a Li₂S-containing composite may be 2.5 V relative to Li/Li⁺. For example, in some embodiments, the maximum charging voltage of Li₂S or a Li₂S-containing composite may be 3.0 V relative to Li/Li⁺. In one or more embodiments, the ratio B/A of the initial charging capacity B of the first anode active material layer 22 to the initial charging capacity A of the cathode active material layer 12 may be, for example, in a range of about 0.01 to about 0.3, about 0.01 to about 0.2, or about 0.05 to about 0.1. The initial charging capacity (mAh) of the cathode active material layer 12 may be obtained by multiplying a charge specific capacity (mAh/g) of the cathode active material by a mass (g) of the cathode active material in the cathode active material layer 12. If (e.g., when) several types (kinds) of the cathode active material are utilized, for each cathode active material, the charging capacity density may be multiplied by the corresponding mass, and the sum of these values may be the initial charging capacity of the cathode active material layer 12. The initial charging capacity of the first anode active material layer 22 may be calculated in substantially the same way. The charging capacity of the first anode material layer 22 may be obtained by multiplying the charging capacity density (mAh/g) of the first anode active material 22 by the mass of the anode active material in first anode active material layer 22. If (e.g., when) several types (kinds) of the anode active material are utilized, for each anode active material, the charging capacity density may be multiplied by the corresponding mass, and the sum of these values may be the initial charging capacity of the first anode active material layer 22. The charging capacity densities of the cathode electrode active material and the anode active material may each be measured by utilizing an all-solid half-cell utilizing lithium metal as a counter electrode. The initial charging capacities of the cathode active material layer 12 and the first anode active material layer 22 may be directly measured, respectively, at a constant current density, e.g., 0.1 mA/cm², by utilizing a solid half-cell. The measurement may be performed on the cathode layer 10 with an operating voltage from the 1^{st} open circuit voltage (OCV) to the maximum charging voltage, e.g., 3.0 V (vs. Li/Li⁺). The measurement may be performed on the anode, e.g., lithium metal, with an operating voltage from the ^{2nd} open circuit voltage (OCV) to 0.01 V. For example, in some embodiments, an all-solid half-cell including the cathode active material layer may be charged at a constant current of 0.1 mA/cm² from the 1^{st} OCV to 3.0 V, and an all-solid half-cell including the first anode active material layer may be charged at a constant current of 0.1 mA/cm² from the 2^{nd} OCV to 0.01 V. In some embodiments, the current density during the charging at a constant current may be, for example, 0.2 mA/cm² or 0.5 mA/cm². In some embodiments, an all-solid half-cell including the cathode active material layer may be, for example, charged from the 1^{st} OCV to 2.5 V, 2.0 V, 3.5 V, or 4.0 V. The maximum charging voltage of the cathode active material may be determined by a maximum voltage of a battery satisfying the safety conditions according to JISC8712:2015 of the Japanese Standards Association.

If (e.g., when) the charging capacity of the first anode active material layer 22 is excessively small, the first anode active material layer 22 may become very thin. In this regard, lithium dendrites formed between the first anode active material layer 22 and the anode current collector 21 during a repeated process of charging and discharging may collapse the first anode active material layer 22, and thus the cycle characteristics of the all solid secondary battery 1 may be difficult to improve. If (e.g., when) the charging capacity of the first anode active material layer 22 excessively increases, the energy density of the all solid secondary battery 1 may be reduced, and the internal resistance of the all solid secondary battery 1 may increase due to the first anode active material layer 22, and thus the cycle characteristics of the all solid secondary battery 1 may be difficult to improve.

In one or more embodiments, a thickness of the first anode active material layer 22 may be, for example, 50 % or less, 40 % or less, 30 % or less, about 20 % or less, 10 % or less, or 5 % or less, with respect to the thickness of the cathode active material layer 12. In some embodiments, the thickness of the first anode active material layer 22 may be, for example, in a range of about 1 % to about 50 %, about 1 % to about 40 %, about 1 % to about 30 %, about 1 % to about 20 %, or about 1 % to about 10 %, with respect to the thickness of the cathode active material layer 12. In one or more embodiments, the thickness of the first anode active material layer 22 may be, for example, in a range of 1 µm to 20 µm, 2 µm to 15 µm, or 3 µm to 10 µm. If (e.g., when) the thickness of the first anode active material layer 22 is too small, lithium dendrites formed between the first anode active material layer 22 and the anode current collector 21 may collapse the first anode active material layer 22, and thus the cycle characteristics of the all solid secondary battery 1 may be difficult to improve. If (e.g., when) the thickness of the first anode active material layer 22 excessively increases, the energy density of the all solid secondary battery 1 may be reduced and the internal resistance of the all solid secondary battery 1 may increase due to the first anode active material layer 22, and thus the cycle characteristics of the all solid secondary battery 1 may be difficult to improve. If (e.g., when) the thickness of the first anode active material layer 22 decreases, for example, the charging capacity of the first anode active material layer 22 may be also reduced.

### Anode layer: Second anode active material layer

Referring to FIG. 4, in one or more embodiments, the all solid secondary battery 1 may further include, for example, a second anode active material layer 24 between the anode current collector 21 and the first anode active material layer 22 by charging. The second anode active material layer 24 may be a metal layer including Li or a Li alloy. The metal layer may include Li or a Li alloy. Therefore, the second anode active material layer 24 which is a Li-containing metal layer may serve as, for example, a Li reservoir. The Li alloy may include, for example, a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but embodiments of the present disclosure are not limited thereto. Any material alloyable with Li in the art may be utilized. The second anode active material layer 24 may include (e.g., consist of) Li, one of the alloys above, or several kinds of alloys. In one or more embodiments, the second anode active material layer 24 may be, for example, a plated layer or a precipitated layer. The second anode active material layer 24 may be plated between the first anode active material layer 22 and the anode current collector 21 during a charging and discharging process of the all solid secondary battery 1.

A thickness of the second anode active material layer 24 is not limited, but may be, for example, in a range of about 1 µm to about 500 µm, about 1 µm to about 200 µm, about 1 µm to about 150 µm, about 1 µm to about 100 µm, or about 1 µm to about 50 µm. If (e.g., when) the thickness of the second anode active material layer 23 is excessively small, the second anode active material layer 24 may have a difficulty in performing a function as a Li reservoir. If (e.g., when) the thickness of the second anode active material layer 24 is excessively large, the mass and volume of the all solid secondary battery 1 may increase, and the cycle characteristics of the all solid secondary battery 1 may be rather degraded.

In some embodiments, in the all solid secondary battery 1, the second anode active material layer 24 may be disposed between the anode current collector 21 and the first anode active material layer 22 before assembling the all solid secondary battery 1. If (e.g., when) the second anode active material layer 24 is arranged between the anode current collector 21 and the first anode active material layer 22 before assembling the all solid secondary battery 1, the second anode active material layer 24 is a Li-containing metal layer, and thus the second anode active material layer 24 may serve as a Li reservoir. For example, in some embodiments, a Li foil may be disposed between the anode current collector 21 and the anode active material layer 22 before assembling the all solid secondary battery 1.

If (e.g., when) the second anode active material layer 24 is plated by charging after assembling the all solid secondary battery 1, the second anode active material layer 24 may not be included at the time of the assembling of the all solid secondary battery 1, and thus the energy density of the all solid secondary battery 1 may increase. During charging of the all solid secondary battery 1, the all solid secondary battery 1 may be charged in excess of the charging capacity of the first anode active material layer 22. For example, the first anode active material layer 22 may be overcharged. At the beginning of charging, Li may be absorbed onto the first anode active material layer 22. The anode active material included in the first anode active material layer 22 may form an alloy or a compound with Li ions that have transferred from the cathode layer 10. If (e.g., when) the charging is performed at a capacity beyond the capacity of the first anode active material layer 22, for example, Li may be plated on a rear surface of the first anode active material layer 22, i.e., between the anode current collector 21 and the first anode active material layer 22. By plating Li, a metal layer corresponding to the second anode active material layer may be formed. The second anode active material layer 24 may be a metal layer mainly composed of (e.g., consisting of) Li (i.e., Li metal). Such a result may be obtained, for example, if (e.g., when) the anode active material included in the first anode active material layer 22 includes (e.g., consists of) a material that forms an alloy or compound with Li. During discharging, Li included in the first anode active material layer 22 and the second anode active material layer 24 which is, for example, a metal layer, may be ionized and move toward the cathode layer 10. In this regard, Li may be utilized as the anode active material in the all solid secondary battery 1. In some embodiments, the first anode active material layer 22 may cover the second anode active material layer 24, and thus the first anode active material layer 22 may serve as a protective layer for the second anode active material layer 24 which is a metal layer, and at the same time, may serve as a layer suppressing the plating growth of Li dendrites. Therefore, the short circuit and the capacity reduction of the all solid secondary battery 1 may be suppressed or reduced, and as a result, the cycle characteristics of the all solid secondary battery 1 may be improved. In some embodiments, if (e.g., when) the second active material layer 24 is disposed by charging after the assembling of the all solid secondary battery 1, the anode layer 20, for example, the anode current collector 21, the first anode active material layer 22, and a region therebetween may be, for example, Li-free regions that do not include Li in an initial state or a post-discharge state of the all solid secondary battery 1.

### Anode layer: Anode current collector

The anode current collector 21 may be formed of, for example, a material that does not react with Li, for example, a material that forms neither an alloy nor a compound with Li. A material for forming the anode current collector 21 may be, for example, Cu, stainless steel, Ti, Fe, Co, Ni, and/or the like, but embodiments of the present disclosure are not limited thereto. Any material available as an electrode current collector in the art may be utilized. The anode current collector 21 may be formed of one of the aforementioned metals, an alloy of two or more of the aforementioned metals, or a coating material. The anode current collector 21 may be, for example, in the form of a plate or foil.

Referring to FIG. 3, in one or more embodiments, the all solid secondary battery 1 may further include a thin film 23, which includes an element capable of forming an alloy with Li, on a (e.g., one surface (or side)) of the anode current collector 21. The thin film 23 may be disposed between the anode current collector 21 and the first anode active material layer 22. The thin film 23 may include, for example, an element capable of forming an alloy with lithium. The element capable of forming an alloy with lithium may include, for example, Au, Ag, Zn, Ti, In, Si, Al, Bi, and/or the like, but embodiments of the present disclosure are not limited thereto. Any material available as an element capable of forming an alloy with lithium in the art may be utilized. The thin film 23 may be formed of one of the aforementioned metals or an alloy of several types (kinds) of the aforementioned metals. If (e.g., when) the thin film 23 is disposed on one surface (or side) of the anode current collector 21, for example, a plated form of the second anode active material layer 24 plated between the thin film 23 and the first anode active material layer 22 may be further flattened, and thus the cycle characteristics of the all solid secondary battery 1 may be further improved.

In one or more embodiments, a thickness of the thin film 23 may be, for example, in a range of about 1 nm to about 800 nm, about 10 nm to about 700 nm, about 50 nm to about 600 nm, or about 100 nm to about 500 nm. If (e.g., when) the thickness of the thin film 23 is less than 1 nm, functions of the thin film 23 may not be exhibited. If (e.g., when) the thickness of the thin film 23 is too large, the thin film 23 itself may be to absorb lithium so that the amount of plated lithium in the anode layer 20 may decrease, thereby reducing the energy density of the all solid secondary battery 1 and accordingly degrading the cycle characteristics of the all solid secondary battery 1. The thin film 23 may be disposed on the anode current collector 21 by, for example, a vacuum deposition method, a sputtering method, a plating method, and/or the like, but the method is not limited thereto. Any method capable of forming the thin film 23 in the art may be utilized.

In one or more embodiments, the anode current collector 21 may include, for example, a base film and a metal layer on (e.g., disposed on) one surface (or side) or both (e.g., two opposite) surfaces (sides) of the base film. The base film may include, for example, a polymer. The polymer may be, for example, a thermoplastic polymer. The polymer may include, for example, PET, PE, PP, PBT, PI, or any combination thereof. The polymer may be an insulating polymer. If (e.g., when) the base film includes an insulating thermoplastic polymer, the base film may be softened or liquified upon the occurrence of a short circuit, so that the operation of a battery may stop and a rapid increase in current may then be suppressed or reduced. The metal layer may include, for example, Cu, stainless steel, Ti, Fe, Co, Ni, or an alloy thereof. In some embodiments, the anode current collector 21 may further include a metal chip and/or a lead tab. Details on the base film, the metal layer, the metal chip, and the lead tab of the anode current collector 21 may be understood by referring to the aforementioned cathode current collector 11. If (e.g., when) the anode current collector 11 has such a structure, the weight of the anode layer 20 may be reduced, and consequently, the energy density of the anode layer 20 and an all solid secondary battery 1 may be improved.

### Solid electrolyte layer

### Solid electrolyte layer: Solid electrolyte

Referring to FIGs. 1 to 6, the solid electrolyte layer 30 may include a solid electrolyte between the cathode layer 10 and the anode layer 20. The solid electrolyte may refer to the solid electrolyte of the solid electrolyte layer described above.

Hereinafter, one or more example embodiments of the present disclosure will be described in more detail through Examples and Comparative Examples. However, these examples are provided to illustrate one or more aspects of the present disclosure, and the scope of the present disclosure is not limited thereto.

### Preparation of composite cathode active material

### Preparation Example 1: Li₂S-LiI-CNF, two-step process, 10 hr, 600 rpm, 28G

### Step(e.g., process, task, or act) 1

Li₂S and LiI were mixed in a weight ratio of 30:20. The mixture was mechanically milled by utilizing a ball mill to prepare a Li₂S-LiI composite. The milling conditions were 25 °C, 600 rpm, and 10 hours. The milling energy applied to a sample during milling was 28 G.

### Step 2

The Li₂S-LiI composite and carbon nanofibers (CNFs) were mixed in a weight ratio of 50:10. The mixture was mechanically milled by utilizing a ball mill to prepare a Li₂S-LiI-CNF composite. The milling conditions were 25 °C, 600 rpm, and 10 hours. The milling energy applied to a sample during milling was 28 G. The Li₂S-LiI-CNF composite was then utilized as a composite cathode active material.

The Mohs hardness of Li₂S was 0.6, the Mohs hardness of LiI was 2.0, and the Mohs hardness of CNFs was 1.5.

### Preparation Example 2: Li2S-Lil-CNF, two-step process, 8 hr, 600 rpm, 28G

A Li₂S-LiI-CNF composite was prepared in substantially the same manner as in Preparation Example 1, except that the milling time in Steps 1 and 2 was each changed to 8 hours.

### Preparation of solid electrolyte layer

### Preparation Example 3: Solid electrolyte ((Li_{5.72}Cu_{0.03})PS_{4.75}Cl_{1.25}) (D₅₀=3.0 µm, crystalline)

Li₂S as a lithium (Li) precursor, P₂S₅ as a phosphorus (P) precursor, LiCI as a chlorine (Cl) precursor, and Cu₂S as a copper (Cu) precursor were prepared separately.

These precursors were prepared separately by wet pulverization. For each precursor, 10 g of a precursor, 30 mL of a xylene solvent, and 100 g of ZrO₂ balls were added to a 80 mL container, and wet ball milling was performed thereon at a speed of 800 rpm for 2 hours. For removal of the xylene solvent, vacuum drying was performed at 120 °C for 36 hours, and the pulverized precursor was stored in an inert atmosphere. In this regard, agglomeration of the particles pulverized by wet pulverization was prevented or reduced.

The particles of the separately prepared precursors were mixed in a stoichiometric ratio to obtain a precursor mixture with a desired or suitable composition of Li_{5.72}Cu_{0.03}PS_{4.75}Cl_{1.25}.

The mixing of the precursor particles was performed by utilizing a dry mixer. The mixing by utilizing a dry mixer prevented or reduced agglomeration and mechanochemical reaction of the precursor particles. In a process utilizing a dry mixer, individual precursors were mixed based on 10 g of a target composition, and then subjected to high-speed mixing at 25,000 rpm for 5 minutes (repeating a cycle of 10 seconds of rotation and 10 seconds of stop).

The resulting powder of the precursor mixture was placed in a carbon crucible, and the carbon crucible was sealed with a quartz glass tube in an argon (Ar) atmosphere. After raising a temperature inside an electric furnace from room temperature (25 °C) to 450 °C at a rate of 1.0 °C/minute, the precursor mixture sealed in an argon atmosphere was subjected to heat treatment at 450 °C for 18 hours, and then, cooled down to room temperature at a rate of 1.0 °C/minute, so as to prepare a solid electrolyte. The prepared solid electrolyte had a composition of Li_{5.72}Cu_{0.03}PS_{4.75}Cl_{1.25}.

### Preparation Example 4: Small-particle solid electrolyte ((Li_{5.72}Cu_{0.03})PS_{4.75}Cl_{1.25}) (D₅₀=1.0 µm, crystalline)

In a glove box under an Ar atmosphere, Li₂S as a Li precursor, P₂S₅ as a P precursor, LiCI as a Cl precursor, and Cu₂S as a Cu precursor were mixed in a stoichiometric ratio to obtain a precursor mixture with a desired or suitable composition of (Li_{5.72}Cu_{0.03})PS_{4.75}Cl_{1.25}.

The obtained precursor mixture was pressured by utilizing a uniaxial pressure to prepare pellets having a thickness of about 10 mm and a diameter of about 13 mm. The prepared pellets were coated with a gold foil and placed in a carbon crucible, and the carbon crucible was vacuum-sealed with a quartz glass tube. In an electric furnace, the vacuum-sealed pellets were subjected to first heat treatment by raising a temperature up to 300 °C for 12 hours at a rate of 1.0 °C/minute, followed by second heat treatment by raising a temperature up to 500 °C for 12 hours at a rate of 1.0 °C/minute. Afterwards, the resulting pellets were cooled down to room temperature at a rate of 1.0 °C/minute, so as to prepare a small particle sulfide-based solid electrolyte with a composition of (Li_{5.72}Cu_{0.03})PS_{4.75}Cl_{1.25} having an average particle diameter of about 1.0 um.

### Preparation Example 5: Large-particle solid electrolyte ((Li_{5.72}Cu_{0.03})PS_{4.75}Cl_{1.25}) (D₅₀=5.0 µm, crystalline)

Li₂S as a lithium precursor, P₂S₅ as a phosphorus precursor, LiCI as a chlorine precursor, and Cu₂S as a copper precursor were combined at a stoichiometric ratio in a glove box under an Ar atmosphere to obtain a target composition (Li_{5.72}Cu_{0.03}) PS_{4.75}Cl_{1.25}, pulverized at 100 rpm for 1 hour by a planetary mill including zirconia

(YSZ) balls under an Ar atmosphere, and then mixed with each other. Subsequently, the mixture was further pulverized and mixed at 800 rpm for 30 minutes to obtain an atomized precursor mixture. The average diameter (D50) of the atomized precursor mixture is about 6 µm. The obtained atomized precursor mixture was uniaxially pressed to prepare a pellet having a thickness of about 10 mm and a diameter of about 13 mm. The prepared pellet was covered with a gold foil and then put into a carbon crucible, and the carbon crucible was sealed in vacuum utilizing a quartz glass tube. The vacuum-sealed pellet was heated from room temperature (25 °C), heat-treated at 420 °C for 12 hours, and then cooled to room temperature at a temperature decrease rate of 1.0 °C /min to obtain a large-particle sulfide-based solid electrolyte.

### Preparation of cathode and solid secondary battery

### Example 1: Li₂S-containing cathode (containing Cu SE alone)/(Li_{1-b}Cu_{b})_{7-z}PS_{6-z}M3_{z} solid electrolyte (hereinafter referred to as Cu SE, first SE)/LiPSCI SE (second SE)/Ag-C anode (SE layer: two-layer structure)

### Preparation of composite cathode active material

Li₂S and LiI were mixed in a weight ratio of 30:20. The mixture was mechanically milled by utilizing a ball mill to prepare a Li₂S-LiI composite. The milling conditions were 25 °C, 600 rpm, and 10 hours. The milling energy applied to a sample during milling was 20 G. Next, the Li₂S-LiI composite and CNFs were mixed in a weight ratio of 50:10. The mixture was mechanically milled by utilizing a ball mill to prepare a Li₂S-LiI-CNF composite. The milling conditions were 25 °C, 600 rpm, and 10 hours. The milling energy applied to a sample during milling was 20 G. The Li₂S-LiI-CNF composite was then utilized as a composite cathode active material.

### Cathode layer

The Li₂S-LiI-CNF composite was prepared as a cathode active material. The solid electrolyte ((Li_{5.72}Cu_{0.03})PS_{4.75}Cl_{1.25}) (hereinafter referred to as Cu SE) (D50=3.0 µm, crystalline) of Preparation Example 3 was prepared as a solid electrolyte, and PTFE was prepared as a binder. These composite cathode active material, solid electrolyte, and binder were mixed in a weight ratio of 60:40:1.2, so as to prepare a cathode mixture. The cathode mixture was subjected to dry mixing by utilizing a Thinky Mixer, so as to prepare a dry cathode.

In detail, the cathode mixture was applied to one side (e.g., one surface) of a cathode current collector consisting of aluminum foil coated with carbon on the one side, and plate-pressed at a pressure of 200 MPa for 10 minutes, so as to prepare a cathode (i.e., cathode layer). The thickness of the cathode was about 120 µm. The thickness of the cathode active material layer was about 100 µm, and the thickness of the carbon-coated aluminum foil was about 20 µm. The areas of the cathode active material layer and the cathode current collector were the same.

### Preparation of anode layer

A 10 µm-thick SUS foil was prepared as an anode current collector. Carbon black (CB) particles having a primary particle diameter of about 30 nm and Ag particles having an average particle diameter of about 60 nm were prepared as anode active materials.

4 g of mixed powder obtained by mixing the CB particles and the Ag particles in a weight ratio of 3:1 was put into a container, and 4 g of an N-methylpyrrolidone (NMP) solution containing 7 wt% of a PVDF binder (#9300 of KUREHA CORPORATION) was added thereto, so as to prepare a mixed solution. NMP was added little by little to the prepared mixed solution while stirring, so as to prepare a slurry. The prepared slurry was applied onto the SUS foil by utilizing a bar coater and dried in the air at 80 °C for 10 minutes, and then vacuum-dried at 40 °C for 10 hours, so as to prepare a laminate. The prepared laminate was subjected to a cold roll pressing process to planarize the surface, so as to prepare an anode (i.e., anode layer) having a first anode active material layer/anode current collector structure. The thickness of the first anode active material layer was about 15 µm. The areas of the first anode active material layer and the anode current collector were the same.

### Preparation of solid electrolyte layer

1.5 parts by weight of an acryl-based binder, based on 98.5 parts by weight of the solid electrolyte, was added to the Cu SE (Li_{5.72}Cu_{0.03})PS_{4.75}Cl_{1.25}) of Preparation Example 3, so as to prepare a mixture. Octyl acetate was added to the prepared mixture while stirring, so as to prepare a slurry. The prepared slurry was applied by utilizing a bar coater onto a 15 µm-thick- nonwoven fabric placed on a 75 µm-thick-PET substrate, and dried in the air at 80 °C for 10 minutes to prepare a laminate. The prepared laminate was vacuum-dried at 80 °C for 2 hours, so as to prepare a first solid electrolyte layer having a thickness of 60 µm.

A second solid electrolyte layer was prepared in substantially the same manner as the first solid electrolyte layer, except that the argyrodite-type or kind crystal Li₆PS₅Cl solid electrolyte (D₅₀=3.0 um, crystalline) was utilized instead of the Cu SE ((Li_{5.72}Cu_{0.03})PS_{4.75}Cl_{1.25}) of Preparation Example 3. The thickness of the second solid electrolyte layer was 40 um.

### Inactive member

A slurry prepared by mixing cellulose fibers as a pulp fibers, glass fibers, aluminum hydroxide (Al(OH)₃), an acryl-based binder, and a solvent was molded in a gasket form, and the solvent was removed therefrom to prepare a flame-retardant inactive member.

The weight ratio of cellulose fibers as a pulp fibers, the glass fibers, the aluminum hydroxide (Al(OH)₃), and the acryl-based binder was 20:8:70:2. The thickness of the inactive member was 120 µm.

Before disposing the prepared flame-retardant inactive member on the solid electrolyte layer, the flame-retardant inactive member was subjected to vacuum heat treatment at 80 °C for 5 hours to remove moisture of the flame-retardant inactive member.

### Preparation of solid secondary battery

The solid electrolyte layer was disposed on the anode (i.e., anode layer) such that the first anode active material layer was in contact with the first solid electrolyte layer and the second electrolyte layer was disposed on the first solid electrolyte layer, and the cathode (i.e., cathode layer) was disposed on the solid electrolyte layer. A gasket was disposed around the cathode to surround the cathode and to be in contact with the solid electrolyte layer, so as to prepare a laminate. The thickness of the gasket was about 120 µm. The flame-retardant inactive member was utilized as the gasket. The gasket was disposed to be in contact with side surfaces of the cathode and with the solid electrolyte layer. The cathode was disposed in the center of the solid electrolyte layer, and the gasket was disposed to surround (or be around) the cathode and to extend to an end portion of the solid electrolyte layer. The area of the cathode was about 90 % of the area of the solid electrolyte layer, and the gasket was disposed over the entire area of the remaining 10 % area of the solid electrolyte layer on which the cathode was not disposed.

The prepared laminate was subjected to a plate pressing process at 85 °C at a pressure of 500 MPa for 30 minutes. The solid electrolyte layer was sintered by such a pressing process, and thus the battery characteristics were improved. The thickness of the sintered solid electrolyte layer was about 45 µm. The density of the argyrodite-type or kind crystal Li₆PS₅Cl solid electrolyte included in the sintered solid electrolyte layer was 1.6 g/cc. The areas of the solid electrolyte layer and the anode were the same.

The pressurized laminate was placed in a pouch, and then vacuum-sealed to prepare an all solid secondary battery. A portion of each of the cathode current collector and the anode current collector was protruded to the outside of the sealed battery to be utilized as a cathode terminal and an anode terminal.

### Example 2: Li₂S-containing cathode (containing Cu SE alone)/Li_{5.72}Cu_{0.03}PS_{4.75}Cl_{1.25} (first SE)/LiPSCI (second SE)/Li_{5.72}Cu_{0.03}PS_{4.75}Cl_{1.25} (third SE)/Ag-C anode (SE layer: three-layer structure)

An all solid secondary battery was prepared in substantially the same manner as in Example 1, except that, as the solid electrolyte layer, a three-layer solid electrolyte layer was utilized instead of the two-layer solid electrolyte layer.

### Preparation of solid electrolyte layer

A solid electrolyte layer having a third-layer structure was prepared by laminating the third solid electrolyte layer on the second solid electrolyte layer of the two-layer solid electrolyte layer having a first solid electrolyte layer/second solid electrolyte layer structure.

The third solid electrolyte layer was prepared in substantially the same manner as the first solid electrolyte layer of Example 1. The thickness of the third solid electrolyte layer was 60 µm.

### Example 3: Li₂S-containing (containing Cu SE alone)/Cu SE ((Li_{1-b}Cu_{b})_{7-z}PS_{6-z}M3_{z}SE, first SE)(containing small-diameter particles and large-diameter particles in a weight ratio of 3:7)/LiPSCI SE (second SE)/Ag-C anode (SE layer: two-layer structure)

An all solid secondary battery was prepared in substantially the same manner as in Example 1, except that a first solid electrolyte layer prepared by mixing the small-particle first SE (D₅₀=1.0 µm) of Preparation Example 4 and the large-particle second SE (D₅₀=5.0 µm) of Preparation Example 5 in a weight ratio of 3:7 was utilized instead of the Cu Se ((Li_{5.72}Cu_{0.03})PS_{4.75}Cl_{1.25}) of Preparation Example 3.

### Example 4: Li₂S-containing cathode (containing LiPSCI SE alone)/Cu SE ((Li_{1-b}Cu_{b})_{7-z}PS_{6-z}M3_{z} SE, first SE)/LiPSCI SE (second SE)/Ag-C anode (SE layer: two-layer structure)

An all solid secondary battery was prepared in substantially the same manner as in Example 1, except that, as the cathode solid electrolyte, the argyrodite-type or kind crystal Li₆PS₅Cl (D₅₀=3.0 µm, crystalline) was utilized instead of the Cu SE utilized alone.

### Example 5: Li₂S-containing cathode (containing Cu SE alone)/Cu SE ((Li_{1-b}Cu_{b})_{7-z}PS_{6-z}M3_{z}, first SE)(containing small-diameter particles and large-diameter particles in weight ratio of 4:6/LiPSCI SE (second SE)/Ag-C anode (SE layer: two-layer structure)

An all solid secondary battery was prepared in substantially the same manner as in Example 1, except that a first solid electrolyte layer prepared by mixing the small-particle first SE (D₅₀=1.0 µm) of Preparation Example 4 and the large-particle second SE (D₅₀=5.0 µm) of Preparation Example 5 in a weight ratio of 4:6 was utilized instead of the Cu SE ((Li_{5.72}Cu_{0.03})PS_{4.75}Cl_{1.25}) of Preparation Example 3.

### Example 6: Anode layer: Using Ag-supported carbon

An all solid secondary battery was prepared in substantially the same manner as in Example 1, except that, as the anode active material, Ag particle-supported carbon black (CB) was utilized instead of the mixture of CB and Ag particles.

### Preparation of Ag particle-supported CB

CB was dispersed on a 1.0 M sulfuric acid solution and stirred for 2 hours, and then filtered and dried, so as to prepare acid-treated CB.

10 g of the acid-treated CB was added to a mixed solvent containing 1,500 g of distilled water, 1,500 g of ethanol, and 30 g of glycerol, and stirred. 2 g of AgNOs was added thereto and then stirred, so as to prepare a mixed solution. The particle diameter of the CB was 80 nm. A reducing agent was added to the mixed solution, and thus Ag ions were reduced and supported on the CB. The CB supported with Ag-containing particles was filtered, washed, and then dried, so as to prepare a composite anode active material. As a result of scanning electron microscopy and XPS measurement, it was confirmed that a plurality of Ag-containing particles were supported on the CB particles. The Ag-containing particles were Ag particles, silver oxide (Ag₂O) particles, and a composite of Ag particles and Ag₂O particles. The amount of the Ag-containing particles included in the composite anode active material was 5 wt%. The average particle diameter of the Ag particles was 10 nm.

### Comparative Example 1: Cathode containing Li₂S and LiPSCI SE/LiPSCI SE (second SE)/Ag-C anode (SE layer: single-layer structure)

An all solid secondary battery was prepared in substantially the same manner as in Example 1, except that the second solid electrolyte layer was utilized alone as the solid electrolyte layer, and the argyrodite-type or kind crystal LiPSCI SE (Li₆PS₅Cl, D50=3.0 µm, crystalline) was utilized as the cathode solid electrolyte.

### Comparative Example 2: Cathode containing Li₂S and LiPSCI SE/ Cu SE (first SE)/Ag-C anode (SE layer: single-layer structure)

An all solid secondary battery was prepared in substantially the same manner as in Example 1, except that the first solid electrolyte layer was utilized alone as the solid electrolyte layer.

### Comparative Example 3: Cathode containing Li₂S and LiPSCI SE/LiPSCI SE (second SE)/Ag-C anode (SE layer: single-layer structure)

An all solid secondary battery was prepared in substantially the same manner as in Example 1, except that the second solid electrolyte layer was utilized alone as the solid electrolyte layer, and the argyrodite-type or kind crystal LiPSCI SE (Li₆PS₅Cl, D50=3.0 µm, crystalline) was utilized as the cathode solid electrolyte.

### Comparative Example 4: Cathode containing Li₂S and Cu SE/ Cu SE (first SE)/Ag-C anode (SE layer: single-layer structure)

An all solid secondary battery was prepared in substantially the same manner as in Example 1, except that the first solid electrolyte layer was utilized alone as the solid electrolyte layer.

### Comparative Example 5: Li₂S-containing cathode (containing Cu SE alone)/LiPSCI (second SE)/Li_{5.72}Cu_{0.03}PS_{4.75}Cl_{1.25} (first SE)/LiPSCI (third SE)/Ag-C anode (SE layer: three-layer structure)

An all solid secondary battery was prepared in substantially the same manner as in Example 2, except that the solid electrolyte layers, i.e., LiPSCI (second SE)/Li_{5.72}Cu_{0.03}PS_{4.75}Cl_{1.25} (first SE)/ LiPSCI (third SE), were laminated in the stated order between the cathode and the anode.

### Reference Example 1: Lithium metal anode

An all solid secondary battery was prepared in substantially the same manner as in Example 1, except that, as the anode active material layer, a lithium metal foil having a thickness of 20 µm was utilized instead of the first anode active material layer including the CB particles and the Ag particles.

### Reference Example 2: Free of first inactive member

An all solid secondary battery was prepared in substantially the same manner as in Example 1, except that the flame-retardant inactive membrane (i.e., gasket) was not utilized in the preparation of the all solid secondary battery.

### Evaluation Example 1: Moisture repellency

For the composite cathode active materials of each of Examples 1 to 6, Comparative Examples 1 to 5, and Reference Examples 1 and 2, the moisture repellency was evaluated by utilizing XRD spectra utilizing Cu Kα radiation. The moisture repellency was calculated by calculating the area size of LiOH peak that appeared after three days in a dry room, and the area size of the composite cathode active material of Example 2 having the smallest area was set as 100 %. For the evaluation of water repellency characteristics, the ratio of the LiOH peak area size obtained after a 3-day dry room exposure of the composite cathode active materials of each of Examples 1 and 3 to 6, Comparative Examples 1 to 5, and Reference Examples 1 and 2 to the LiOH peak area size obtained after a 3-day dry room exposure of the composite cathode active material of Example 2 was calculated and evaluated. The results of evaluating the water repellency characteristics are shown in Table 1.

**Table 1**

| | Moisture repellency (%) |
|---|---|
| Example 1: Li₂S-containing cathode (containing Cu SE alone)/(Li_{1-b}Cu_{b})_{7-z}PS_{6-z}M3_{z} SE (hereinafter referred to as Cu SE)(first SE)/LiPSCl SE (second SE)/Ag-C anode(SE layer: two-layer structure) | 88 |
| Example 2: Li₂S-containing cathode (containing Cu SE alone)/Li_{5.72}Cu_{0.03}PS_{4.75}Cl_{1.25} (first SE)/LiPSCl (second SE)/Li_{5.72}Cu_{0.03}PS_{4.75}Cl_{1.25} (third SE)/Ag-C anode (SE layer: three-layer structure) | 100 |
| Example 3: Li₂S-containing (containing Cu SE alone)/Cu SE ((Li_{1-b}Cu_{b})_{7-z}PS_{6-z}M3_{z}, first SE)(containing small-diameter particles and large-diameter particles at a weight ratio of 3:7 /LiPSCl SE (second SE)/Ag-C anode (SE layer: two-layer structure) | 93 |
| Example 4: Cathode solid electrolyte (containing LiPSCI SE alone)/Cu SE ((Li_{1-b}Cu_{b})_{7-z}PS_{6-z}M3_{z}, first SE)/LiPSCl SE (second SE)/Ag-C anode (SE layer: two-layer structure) | 83 |
| Example 5: Li₂S-containing cathode (containing Cu SE alone)/(Li_{1-b}Cu_{b})_{7-z}PS_{6-z}M3_{z}SE (Cu SE, first SE)(containing small-diameter particles and large-diameter particles at a weight ratio of 4:6/LiPSCl SE (second SE)/Ag-C anode (SE layer: two-layer structure) | 85 |
| Example 6: Li₂S-containing cathode (containing Cu SE alone)/(Cu SE, first SE)/LiPSCl SE (second SE)/Ag-C anode (utilizing Ag-supported carbon) (SE layer: two-layer structure) | 91 |
| Comparative Example 1: Cathode containing Li₂S and LiPSCI SE/LiPSCl SE (second SE)/Ag-C anode (SE layer: single-layer structure) | 51 |
| Comparative Example 2: Cathode containing Li₂S and LiPSCl SE/ Cu SE (first SE)/Ag-C anode (SE layer: single-layer structure) | 58 |
| Comparative Example 3: Cathode containing Li₂S and LiPSCl SE/LiPSCl SE (second SE)/Ag-C anode (SE layer: single-layer structure) | 59 |
| Comparative Example 4: Cathode containing Li₂S and Cu SE/Cu SE (first SE)/Ag-C anode (SE layer: single-layer structure) | 67 |
| Comparative Example 5: Li₂S-containing cathode (containing Cu SE alone)/LiPSCl (second SE)/Li_{5.72}Cu_{0.03}PS_{4.75}Cl_{1.25} (first SE)/LiPSCl (third SE)/Ag-C anode (SE layer: three-layer structure) | 57 |
| Reference Example 1: Lithium metal anode | 34 |
| Reference Example 2: Free of first inactive member | 48 |

As shown in Table 1, it was confirmed that each of the all solid secondary batteries of Examples 1 to 6 had improved water repellency compared to the all solid secondary batteries of Comparative Examples 1 to 5 and Reference Examples 1 and 2.

In the all solid secondary battery of Comparative Example 5, the first SE was not disposed adjacent to at least one of the cathode or the anode so that the water repellency characteristics were degraded, compared to the water repellency characteristics of the all solid secondary batteries of Examples 1 to 6. It was then confirmed that the improved water repellency characteristics could be exhibited if (e.g., when) the first SE (Li_{5.72}Cu_{0.03}PS_{4.75}Cl_{1.25}) was directly in contact with the cathode and the anode.

### Evaluation Example 2: Test on lifespan characteristics

The charging and discharging characteristics of each of the all solid secondary batteries of Examples 1 to 6, Comparative Examples 1 to 3 and 5, and Reference Examples 1 and 2 were evaluated by the following charging and discharging test. The charging and discharging test was performed by putting the all solid secondary battery in a thermostatic bath at 45 °C.

The charging and discharging test was performed by putting the all solid secondary battery in a thermostatic bath at 45 °C.

The first cycle was charging for 12.5 hours with a constant current of 0.1 C until the battery voltage reached 2.5 V to 2.8 V. Subsequently, discharging was performed for 12.5 hours with a constant current of 0.1 C until the battery voltage reached 0.3 V.

The discharge capacity of the first cycle was set as the standard capacity. The standard capacity was indicated as specific capacity of Li₂S in Table 3.

Following the first cycle, a charging and discharging cycle was repeated up to 150 cycles under the same conditions as the first cycle. Results of the measurement are shown in Table 2. The initial efficiency is represented by Equation 1: Initial efficiency [%] = [discharge capacity in first cycle / charge capacity in first cycle] × 100

The number of cycles refers to the number of cycles required for the discharge capacity to decrease to 80 % of the standard capacity after the second cycle. It was considered to have excellent or suitable lifespan characteristics as the number of cycles increased.

**Table 2**

| | Initial efficiency [%] | Number of cycles [times] |
|---|---|---|
| Example 1: Li₂S-containing cathode (containing Cu SE alone)/(Li_{1-b}Cu_{b})_{7-z}PS_{6-z}M3_{z} SE (Cu SE, first SE)/LiPSCl SE (second SE)/Ag-C anode (SE layer: two-layer structure) | 82 | 180 |
| Example 2: Li₂S-containing cathode (containing Cu SE alone)/Li_{5.72}Cu_{0.03}PS_{4.75}Cl_{1.25} (first SE)/LiPSCl (second SE)/Li_{5.72}Cu_{0.03}PS_{4.75}Cl_{1.25} (third SE)/Ag-C anode (SE layer: three-layer structure) | 84 | 250 |
| Example 3: Li₂S-containing cathode (containing Cu SE alone)/(Li_{1-b}Cu_{b})_{7-z}PS_{6-z}M3_{z}SE (Cu SE, first SE)(containing small-diameter particles and large-diameter particles at a weight ratio of 3:7/LiPSCl SE (second SE)/Ag-C anode (SE layer: two-layer structure) | 85 | 240 |
| Example 4: Cathode solid electrolyte (containing LiPSCI SE alone)/(Li_{1-b}Cu_{b})_{7-z}PS_{6-z}M3_{z} SE (Cu SE, first SE)/LiPSCl SE (second SE)/Ag-C anode (SE layer: two-layer structure) | 78 | 130 |
| Example 5: Li₂S-containing cathode (containing Cu SE alone)/(Li_{1-b}Cu_{b})_{7-z}PS_{6-z}M3_{z}SE (Cu SE, first SE)(containing small-diameter particles and large-diameter particles at a weight ratio of 4:6/LiPSCl SE (second SE)/Ag-C anode (SE layer: two-layer structure) | 75 | 100 |
| Example 6: Li₂S-containing cathode (containing Cu SE alone)/(Cu SE, first SE)/LiPSCl SE (second SE)/Ag-C anode (utilizing Ag-supported carbon) (SE layer: two-layer structure) | 85 | 220 |
| Comparative Example 1: Cathode containing Li₂S and LiPSCl SE/LiPSCl SE (second SE)/Ag-C anode (SE layer: single-layer structure) | 75 | 60 |
| Comparative Example 2: Cathode containing Li₂S and LiPSCl SE/ Cu SE (first SE)/Ag-C anode (SE layer: single-layer structure) | 77 | 80 |
| Comparative Example 3: Cathode containing Li₂S and LiPSCl SE/LiPSCl SE (second SE)/Ag-C anode (SE layer: single-layer structure) | 76 | 70 |
| Comparative Example 5: Li₂S-containing cathode (containing Cu SE alone)/LiPSCI (second SE)/Li_{5.72}Cu_{0.03}PS_{4.75}Cl_{1.25} (first SE)/LiPSCl (third SE)/Ag-C anode (SE layer: three-layer structure) | 75 | 65 |
| Reference Example 1: Lithium metal anode | 83 | 50 |
| Reference Example 2: Free of first inactive member | 71 | 30 |

As shown in Table 2, the all solid secondary batteries of Examples 1 to 6 each showed improved discharge capacity, improved initial efficiency, and improved lifespan characteristics compared to the all solid secondary batteries of Reference Example 2 and Comparative Examples 2 and 3. The all solid secondary batteries of Comparative Examples 1 and 5 showed the same initial efficiency as the all solid secondary battery of Example 5, but showed degraded lifespan characteristics. As shown in Table 2, the all solid secondary battery of Reference Example 1 showed excellent or suitable initial efficiency, but had very poor results in the lifespan characteristics.

### Evaluation Example 3: High-rate characteristics

For each of the all solid secondary batteries of Examples 1 to 6, Reference Examples 1 and 2, and Comparative Examples 1 to 5, the high-rate characteristics were evaluated by the following charging and discharging test. The charging and discharging test was performed by putting the all solid secondary battery in a thermostatic bath at 45 °C.

Each of the all solid secondary batteries of Examples 1 to 6, Reference Examples 1 and 2, and Comparative Examples 1 to 5 was charged with a constant current of 0.1 C rate at 45 °C until a voltage reached 2.5 V (vs. Li), and was then cutoff at a current of 0.05 C rate while maintaining the voltage at 2.5 V in a constant voltage mode. Subsequently, each of the all solid secondary batteries was discharged at a constant current of 0.1 C rate until the voltage reached 0.3 V (vs. Li) (formation cycle).

The all solid secondary batteries undergoing the formation cycle were each charged with a constant current under conditions of a temperature of 45 °C and a current of 0.2 C rate, until the voltage reached 2.5 V (vs. Li). Subsequently, each of the all solid secondary batteries was discharged at a constant current of 0.2 C rate until the voltage reached 0.3 V (vs. Li) (1^{st} cycle).

The all solid secondary batteries undergoing the 1^{st} cycle were each charged with a constant current under conditions of a temperature of 45 °C and a current of 0.2 C rate, until the voltage reached 2.5 V (vs. Li). Subsequently, each of the all solid secondary batteries was discharged at a constant current of 0.33 C rate until the voltage reached 0.3 V (vs. Li) (2^{nd} cycle).

The all solid secondary batteries undergoing the 2^{nd} cycle were each charged with a constant current under conditions of a temperature of 45 °C and a current of 0.2 C rate, until the voltage reached 2.5 V (vs. Li). Subsequently, each of the all solid secondary batteries was discharged at a constant current of 0.5 C rate until the voltage reached 0.3 V (vs. Li) (3^{rd} cycle).

The all solid secondary batteries undergoing the 3^{rd} cycle were each charged with a constant current under conditions of a temperature of 45 °C and a current of 0.2 C rate, until the voltage reached 2.5 V (vs. Li). Subsequently, each of the all solid secondary batteries was discharged at a constant current of 1.0 C rate until the voltage reached 0.3 V (vs. Li) (4^{th} cycle).

In all charging and discharging cycles, a 10-minute stop time was provided after every one charging and discharging cycle. Some of the results of the charging and discharging test at room temperature are shown in Table 2. The high-rate characteristics are represented by Equation 2: High-rate characteristics [%] = [discharge capacity in 4th cycle / discharge capacity in 1st cycle] × 100

**Table 3**

| | High-rate characteristics (1 C/0.2 C) [%] |
|---|---|
| Example 1: Li₂S-containing cathode (containing Cu SE alone)/(Li_{1-b}Cu_{b})_{7-z}PS_{6-z}M3_{z} SE (Cu SE, first SE)/LiPSCl SE (second SE)/Ag-C anode (SE layer: two-layer structure) | 84 |
| Example 2: Li₂S-containing cathode (containing Cu SE alone)/Li_{5.72}Cu_{0.03}PS_{4.75}Cl_{1.25} (first SE)/LiPSCl (second | 89 |
| SE)/Li_{5.72}Cu_{0.03}PS_{4.75}Cl_{1.25} (third SE)/Ag-C anode (SE layer: three-layer structure) | |
| Example 3: Li₂S-containing cathode (containing Cu SE alone)/(Cu SE, first SE)(small-diameter particles and large-diameter particles)/LiPSCl SE (second SE)/Ag-C anode (SE layer: two-layer structure) | 91 |
| Example 4: Cathode solid electrolyte containing LiPSCl SE alone)/(Li_{1-b}Cu_{b})_{7-z}PS_{6-z}M3_{z} SE (Cu SE, first SE)/LiPSCl SE (second SE)/Ag-C anode (SE layer: two-layer structure) | 78 |
| Example 5: Cathode solid electrolyte containing Cu SE and LiPSCl SE)/ Cu SE (first SE)/LiPSCl SE (second SE)/Ag-C anode (SE layer: two-layer structure) | 82 |
| Example 6: Li₂S-containing cathode (containing Cu SE alone)/(Cu SE, first SE)/LiPSCl SE (second SE)/Ag-C anode (utilizing Ag-supported carbon) (SE layer: two-layer structure) | 86 |
| Comparative Example 1: Cathode containing Li₂S and LiPSCI SE/LiPSCl SE (first SE)/Ag-C anode (SE layer: single-layer structure) | 68 |
| Comparative Example 2: Cathode containing Li₂S and LiPSCl SE/ Cu SE (first SE)/Ag-C anode (SE layer: single-layer structure) | 71 |
| Comparative Example 3: Cathode containing Li₂S and LiPSCl SE/LiPSCl SE (second SE)/Ag-C anode (SE layer: single-layer structure) | 67 |

| Comparative Example 4: Cathode containing Li₂S and Cu SE/ Cu SE (first SE)/Ag-C anode (SE layer: single-layer structure) | 75 |
|---|---|
| Comparative Example 5: Li₂S-containing cathode (containing Cu SE alone)/LiPSCl (second SE)/Li_{5.72}Cu_{0.03}PS_{4.75}Cl_{1.25} (first SE)/LiPSCl (third SE)/Ag-C anode (SE layer: three-layer structure) | 69 |
| Reference Example 1: Lithium metal anode | 62 |
| Reference Example 2: Free of first inactive member | 48 |

As shown in Table 3, it was confirmed that each of the all solid secondary batteries of Examples 1 to 6 had improved high-rate characteristics compared to the all solid secondary batteries of Comparative Examples 1 to 5 and Reference Examples 1 and 2.

According to the one more embodiments of the present disclosure, utilization of an improved sulfide-based solid electrolyte may provide an all solid secondary battery having improved energy density and improved high-rate characteristics.

In the present disclosure, the terms "cathode" and "cathode layer" are interchangeable unless the context clearly dictates otherwise, and the terms "anode" and "anode layer" are interchangeable unless the context clearly dictates otherwise.

In present disclosure, "not include (or not including) a or any 'component'" "exclude (or excluding) a or any 'component'", "'component'-free", "free of 'component'" and/or the like refers to that the "component" not being added, selected or utilized as a component in the composition, but the "component" of less than a suitable amount may still be included due to other impurities and/or external factors.

As utilized herein, the terms "substantially," "about," and similar terms are used as terms of approximation and not as terms of degree, and are intended to account for the inherent deviations in measured or calculated values that would be recognized by those of ordinary skill in the art.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

The battery module, battery pack, battery management system, electric vehicle, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the present disclosure as defined by the appended claims and equivalents thereof.

## Claims

1. An all solid secondary battery (1) comprising:
a cathode layer (10); an anode layer (20); and a solid electrolyte layer between the cathode layer (10) and the anode layer (20),
wherein the cathode layer (10) comprises: a cathode current collector (11); and a cathode active material layer (12) on a side of the cathode current collector (11),
the cathode active material layer (12) comprises a M₂S-containing composite, M being lithium or sodium,
the solid electrolyte layer (30) comprises: a first solid electrolyte layer (30a) comprising a first solid electrolyte represented by Formula 1; and a second solid electrolyte layer (30b) comprising a second solid electrolyte represented by Formula 2, the first solid electrolyte layer (30a) being directly on at least one of the cathode active material layer (12) or a first anode active material layer (22), preferably adjacent to the cathode layer (10), and
the anode layer (20) comprises an anode current collector (21) and the first anode active material layer (22) on a side of the anode current collector (21):
Formula 1 (Li_{1-b}M0_{b})_{7-z}PS_{6-z}M3_{z},
wherein, in Formula 1,
M0 is Na, K, Fe, Mg, Ca, Ag, Cu, Zr, Zn, or any combination thereof, and
M3 is an element selected from elements of Group 17 of the periodic table of the elements, 0≤b≤0.05, and 0≤z≤2,
Formula 2 LiₐM1ₓM2_{w}PS_{y}M3_{z}, and
wherein, in Formula 2, M1 is an element selected from elements of Groups 2 and 11 of the periodic table of the elements,
M2 is a metal element other than Li, selected from elements of Group 1 of the periodic table of the elements, and
M3 is an element selected from elements of Group 17 of the periodic table of the elements, 4≤a≤8, 0≤x≤0.5, 0≤w≤0.5, 3≤y≤7, and 0≤z≤2.

2. The all solid secondary battery (1) as claimed in claim 1, wherein the first solid electrolyte represented by Formula 1 is represented by Formula 1-1:
Formula 1-1 (Li_{1-b}Cu_{b})₇₋zPS₆₋zM3_{z}, and
wherein, in Formula 1-1, M3 is F, Cl, Br, or I, 0≤b≤0.05, and 0≤z≤2.

3. The all solid secondary battery (1) as claimed in claim 1 or 2, wherein, in Formula 2, M1 is Mg, Ag, Cu, Hf, In, Ti, Pb, Sb, Fe, Zr, Zn, Cr, B, Sn, Ge, Si, Zr, Ta, Nb, V, Ga, Al, As, or any combination thereof, M2 is Na, K, or a combination thereof, and M3 is F, Cl, Br, or I.

4. The all solid secondary battery (1) as claimed in any of the claims 1 to 3, wherein the solid electrolyte layer (30) further comprises a third solid electrolyte layer (30c) comprising a third solid electrolyte,
the third solid electrolyte is represented by Formula 3-1, and
the third solid electrolyte layer (30c) is on the second solid electrolyte layer (30b):
Formula 3-1 (Li_{1-b}Cu_{b})_{7-z}PS_{6-z}M4_{z}, and
wherein, in Formula 3, M4 is an element selected from elements of Group 17 of the periodic table of the elements,
0≤b≤0.05, and 0≤z≤2.

5. The all solid secondary battery (1) as claimed in any of the claims 1 to 4, wherein the first solid electrolyte and the second solid electrolyte each comprise a large-diameter solid electrolyte in a form of particles having an average particle diameter of about 3 µm to about 10 micrometers (µm) and a small-diameter solid electrolyte in a form of particles having an average particle diameter of about 1 µm to about 3 µm, and
a mixing weight ratio of the large-diameter solid electrolyte to the small-diameter solid electrolyte is in a range of about 10:90 to about 90:10.

6. The all solid secondary battery (1) as claimed in any of the claims 1 to 5, wherein the cathode layer (10) comprises at least one of the first solid electrolyte represented by Formula 1 or the second solid electrolyte represented by Formula 2:
Formula 1 (Li_{1-b}M0_{b})_{7-z}PS_{6-z}M3_{z},
wherein, in Formula 1,
M0 is Na, K, Fe, Mg, Ca, Ag, Cu, Zr, Zn, or any combination thereof, and
M3 is an element selected from elements of Group 17 of the periodic table of the elements,
0≤b≤0.05, and 0≤z≤2,
Formula 2 LiₐM1ₓM2_{w}PS_{y}M3_{z}, and
wherein, in Formula 2, M1 is an element selected from elements of Groups 2 and 11 of the periodic table of the elements,
M2 is a metal element other than Li, selected from elements of Group 1 of the periodic table of the elements,
M3 is an element selected from elements of Group 17 of the periodic table of the elements, 0≤a≤8, 0≤x≤0.5, 0≤w≤0.5, 3≤y≤7, and 0≤z≤2.

7. The all solid secondary battery (1) as claimed in any of the claims 1 to 6, wherein a thickness of each of the first solid electrolyte layer (30a) and the second solid electrolyte layer is in a range of about 10 µm to about 200 µm, and
a thickness ratio of the first solid electrolyte layer (30a) to the second solid electrolyte layer is in a range of about 1:1 to about 6:4.

8. The all solid secondary battery (1) as claimed in any of the claims 1 to 7, wherein the M₂S-containing composite comprises
a composite of M₂S and a carbon-based material,
a composite of M₂S, a carbon-based material, and a solid electrolyte,
a composite of M₂S and a solid electrolyte,
a composite of M₂S, a carbon-based material, and an alkali metal salt,
a composite of M₂S and an alkali metal salt,
a composite of M₂S and a metal carbide,
a composite of M₂S, a carbon-based material, and a metal carbide,
a composite of M₂S and a metal nitride,
a composite of M₂S, a carbon-based material, and a metal nitride, or
any combination thereof, and /or wherein the M₂S-containing composite is a Li₂S-containing composite, whereby preferably the Li₂S-containing composite comprises a composite of Li₂S, a lithium salt, and a carbon-based material, and preferably the Li₂S-containing composite comprises, based on 100 parts by weight of Li₂S-containing the composite, about 10 parts by weight to about 80 parts by weight of Li₂S, about 1 part by weight to about 40 parts by weight of the lithium salt, and about 1 part by weight to about 20 parts by weight of the carbon-based material.

9. The all solid secondary battery (1) as claimed in any of the claims 1 to 8, wherein the alkali metal salt is a lithium salt or a sodium salt, and
the alkali metal salt is a binary compound or a ternary compound,
the binary compound comprising: Lil, LiBr, LiCI, LiF, LiH, Li₂O, Li₂Se, Li₂Te, Li₃N, LisP, Li₃As, Li₃Sb, Li₃Al₂, LiBs, or any combination thereof; or Nal, NaBr, NaCl, NaF, Na₂O, Na₂Se, Na₃N, Na₃P, Na₃As, Na₃Sb, Na₃Al₂, NaB₃, or any combination thereof,
the ternary compound comprising: LisOCI, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, or any combination thereof; or Na₃OCl, NaBF₄, NaPF₆, NaAsF₆, NaClO₄, NaNO₃, NaAlO₂, NaAlCl₄, NaNO₃, Na₂CO₃, NaBH₄, Na₂SO₄, Na₃BO₃, Na₃PO₄, Na₄NCl, Na₅NCl₂, Na₃BN₂, or any combination thereof.

10. The all solid secondary battery (1) as claimed in any of the claims 1 to 9, wherein the carbon-based material comprises a fibrous carbon-based material,
the fibrous carbon-based material has a carbon nanostructure, and
the carbon nanostructure comprises carbon nanofibers, carbon nanotubes, carbon nanobelts, carbon nanorods, or any combination thereof.

11. The all solid secondary battery (1) as claimed in any of the claims 1 to 10, wherein the first anode active material layer (22) comprises an anode active material and a binder,
the anode active material is in a form of particles, and an average particle diameter of the anode active material is 4 µm or less.

12. The all solid secondary battery (1) as claimed in any of the claims 1 to 11, wherein the anode active material comprises at least one of a carbon-based anode active material or a metal or metalloid anode active material,
the carbon-based anode active material comprising amorphous carbon, crystalline carbon, porous carbon, or any combination thereof,
the metal or metalloid anode active material comprising gold, platinum, palladium, silicon, silver, aluminum, bismuth, tin, zinc, or any combination thereof,
and/ or the anode active material comprises: a carbon-based support; and a metal-based anode active material supported on the carbon-based support,
the metal-based anode active material comprises a metal, a metal oxide, a composite of a metal and a metal oxide, or any combination thereof,
the metal-based anode active material is in a form of particles, and a particle diameter of the metal-based anode active material is in a range of about 1 nm to about 200 nm, and
the carbon-based support is in a form of particles, and a particle diameter of the carbon-based support is in a range of about 10 nm to about 200 µm.

13. The all solid secondary battery (1) as claimed in any of the claims 1 to 12, wherein at least one of the cathode current collector (11) or the anode current collector (21) comprise a base film and a metal layer on a side of the base film,
the base film comprises a polymer, the polymer comprising polyethylene terephthalate, polyethylene, polypropylene, polybutylene terephthalate, polyimide, or any combination thereof, and
the metal layer comprises indium, copper, magnesium, stainless steel, titanium, iron, cobalt, nickel, zinc, aluminum, germanium, lithium, or any alloy thereof.

14. The all solid secondary battery (1) as claimed in any of the claims 1 to 13, further comprising a first inactive member on a side of the cathode layer (10), wherein the inactive member comprises a flame-retardant inactive member and/ or wherein the solid electrolyte layer (30) comprises a solid electrolyte, a gel electrolyte, or any combination thereof,
the solid electrolyte comprising a sulfide-based solid electrolyte, an oxide-based solid electrolyte, a polymer solid electrolyte, or any combination thereof,
the gel electrolyte comprising a polymer gel electrolyte.

15. The all solid secondary battery (1) as claimed in any of the claims 1 to 14, further comprising
a second anode active material layer (24) between the anode current collector (21) and the first anode active material layer (22) and/or between the anode current collector (21) and the solid electrolyte layer (30),
wherein the second anode active material layer (24) is a metal layer comprising lithium or a lithium alloy.
